# EUROPEAN PATENT APPLICATION

(11) **EP 4 582 224 A1**
(43) Date of publication of application: **09.07.2025**
(21) Application number: 24150684.9
(22) Date of filing: 08.01.2024
(51) Int. Cl.: B25J 9/16

(54) **APPARATUS CONTROL**

(71) Applicant: UK Atomic Energy Authority, Abingdon OX14 3DB (GB)
(72) Inventor: BURROUGHS, Guy, Abingdon, OX14 3DB (GB); BARROW, Alastair, Stratford-Upon-Avon, CV37 7GZ (GB); SMITH, Thomas, Stratford-Upon-Avon, CV37 7GZ (GB)
(74) Representative: Dehns

(57) **Abstract**

A modelling unit configured to control a virtual model of a virtual apparatus in a virtual environment corresponding to a real-world apparatus in a real-world environment; receive real-world data of the real-world apparatus and input data; and output a control signal to control the real-world apparatus, wherein the modelling unit is further configured to: control the virtual apparatus based on the real-world data so that movement of the real-word apparatus and/or one or more forces applied to the real-world apparatus represented in the real-world data affect movement of the virtual apparatus; control the virtual apparatus based on the input data so that the input data affects movement of the virtual apparatus; and control the real-word apparatus based on the virtual apparatus so that movement of the virtual apparatus governs movement of the real-world apparatus.

## Description

The present invention relates to apparatus control, and in particular to a unit, a system, a computer-implemented method, and a computer program.

Apparatus control includes the remote control of a robot in an industrial setting. As the use of apparatuses or robots for performing tasks becomes more widespread, there is a desire for improved and more intuitive control of such apparatuses or robots.

According to a first aspect of the present invention, there is disclosed herein a modelling unit configured to: control a virtual model of a virtual apparatus in a virtual environment corresponding to a real-world apparatus in a real-world environment; receive real-world data of the real-world apparatus and (user) input data; and output a control signal to control the real-world apparatus, wherein the modelling unit is further configured to: control the virtual apparatus based on the real-world data so that movement/actuation of the real-word apparatus and/or one or more forces applied to the real-world apparatus represented in the real-world data affect movement/actuation of the virtual apparatus; control the virtual apparatus based on the (user) input data so that the (user) input data affects movement/actuation of the virtual apparatus; and (automatically) control the real-word apparatus based on the virtual apparatus so that movement/actuation of the virtual apparatus governs/controls/affects movement/actuation of the real-world apparatus.

The real-world apparatus in the real-world environment may approximate the virtual apparatus in the virtual environment and/or vice versa.

The real-world data may comprise image and/or video data of the real-world apparatus.

The real-world data may comprise force sensor data of the real-world apparatus.

The real-world data may comprise image data and/or video data and/or laser scanning data and/or mass data and/or center of mass data and/or surface friction data and/or surface stiffness data and/or force sensor data and/or position sensor data and/or velocity sensor data.

The real-world data may comprise feedback data from one or more actuators or adjustable elements of the real-world apparatus.

The modelling unit may be configured to control the virtual apparatus based on the real-world data and a defined linkage between corresponding elements of the virtual apparatus and the real-world apparatus so that movement/actuation of the real-word apparatus affects movement/actuation of the virtual apparatus; and/or the modelling unit may be configured to control the virtual apparatus based on the (user) input data and the defined linkage between corresponding elements of the virtual apparatus and the real-world apparatus so that the (user) input data affects movement/actuation of the virtual apparatus; and/or the modelling unit may be configured to (output a control signal to) (automatically) control the real-word apparatus based on the virtual apparatus and the defined linkage between corresponding elements of the virtual apparatus and the real-world apparatus so that movement/actuation of the virtual apparatus governs/controls/affects movement/actuation of the real-world apparatus.

The defined linkage between corresponding elements of the virtual apparatus and the real-world apparatus may comprise a mass-spring-damper (mathematical) relationship between the corresponding elements of the virtual apparatus and the real-world apparatus, wherein (so that) the control signal is configured to control the (movement and/or actuation of) the real-world apparatus according to the mass-spring-damper (mathematical) relationship and the modelling unit is configured to control the (movement and/or actuation of) the virtual apparatus according to the mass-spring-damper (mathematical) relationship.

The defined linkage between corresponding elements of the virtual apparatus and the real-world apparatus may comprise a mass-spring-damper (mathematical) relationship between the corresponding elements of the virtual apparatus and the real-world apparatus).

The defined linkage between corresponding elements of the virtual apparatus and the real-world apparatus may comprise a mass-spring-damper (mathematical) relationship between an element of the virtual apparatus and a corresponding said elements of the real-world apparatus, wherein (so that) the control signal is configured to control the (movement and/or actuation of) the element of the real-world apparatus according to the mass-spring-damper (mathematical) relationship and the modelling unit is configured to control the (movement and/or actuation of) the element of the virtual apparatus according to the mass-spring-damper (mathematical) relationship.

The modelling unit may be configured to control the virtual apparatus by controlling/modelling movement/actuation/configuration of each of a plurality of virtual adjustable elements of the virtual apparatus based on the (user) input data, and the control signal may be configured to (automatically) control, based on the movement/actuation/configuration of the plurality of virtual adjustable elements, movement/actuation/configuration of each of a plurality of adjustable elements of the real-world apparatus corresponding to the virtual adjustable elements according to a mass-spring-damper relationship between the virtual adjustable elements and the corresponding adjustable elements.

The defined linkage between corresponding elements of the virtual apparatus and the real-world apparatus may comprise a linkage (or the mass-spring-damper (mathematical) relationship may be) such that a difference between a relative position of the virtual apparatus and a relative position of the real-world apparatus gives rise to a real-world force controlled/effected by the control signal to bring the real-world apparatus towards a position corresponding to the position of the virtual apparatus and a virtual force controlled/effected by the modelling unit to bring the virtual apparatus towards a position corresponding to the position of the real-world apparatus.

The defined linkage between corresponding elements of the virtual apparatus and the real-world apparatus may comprise a linkage (or the mass-spring-damper (mathematical) relationship may be) such that a difference between a relative position/configuration of a said element of the virtual apparatus and a relative position/configuration of corresponding said element of the real-world apparatus gives rise to a real-world force controlled/effected by the control signal to bring said element of the real-world apparatus towards a position/configuration corresponding to the position/configuration of the said element of the virtual apparatus and a virtual force controlled/effected by the modelling unit to bring the said element of the virtual apparatus towards a position/configuration corresponding to the position/configuration of the said element of the real-world apparatus.

The magnitude of the force may decrease as the difference decreases.

The magnitude of the force may scale with the difference.

The modelling unit may be configured to control the virtual apparatus by simulating movement/actuation/configuration of each of a plurality of virtual adjustable elements of the virtual apparatus based on the (user) input data, and the control signal may be configured to (automatically) control, based on the simulated movement/actuation/configuration of the plurality of virtual adjustable elements, movement/actuation/configuration of each of a plurality of adjustable elements of the real-world apparatus corresponding to the virtual adjustable elements.

The modelling unit may be configured to control the virtual apparatus based on the (user) input data and a defined linkage between corresponding elements of the virtual apparatus and the input device so that the (user) input data affects movement/actuation of the virtual apparatus; and/or the input device may be configured to output (haptic) feedback based on the movement/actuation of the virtual apparatus and the defined linkage between corresponding elements of the virtual apparatus and the input device.

The modelling unit may be configured to model the virtual environment to include a virtual representation of real-world physical surroundings in the real-world environment.

The modelling unit may be configured to model the virtual environment to include at least one virtual object corresponding to a real-world object in the real-world environment; and/or the modelling unit may be configured to model the virtual environment to include at least one virtual object not corresponding to a real-world object in the real-world environment.

The modelling unit may be configured to model the virtual environment to include at least one virtual object (which does not correspond to the real-world environment).

The modelling unit may be configured to model the virtual environment to include at least one virtual object to impede/constrain the movement/actuation of the virtual apparatus (wherein the at least one virtual object does not correspond to the real-world environment).

The modelling unit may be configured to control the virtual apparatus by simulating the obstruction of the movement of the virtual apparatus when blocked by the virtual environment.

The modelling unit may be configured to model at least one constraint in the virtual model, the at least one constraint comprising at least one of: maintaining a fixed distance and/or a fixed orientation between two entities in the virtual model; maintaining a minimum and/or maximum distance between two entities in the virtual model; maintaining a minimum and/or maximum orientation difference between two entities in the virtual model; maintaining a minimum and/or maximum vertical distance between two entities in the virtual model; maintaining a minimum and/or maximum distance between an entity in the virtual model and a fixed point in space in the virtual model; and maintaining at least a part of the virtual apparatus at a fixed position (within the virtual environment), wherein a said entity comprises a part of the virtual apparatus or virtual environment.

The modelling unit may be configured to control the virtual model so that the friction of at least one surface in the virtual environment or the virtual apparatus is higher or lower than the friction of the corresponding at least one surface of the real-world environment or the real-world apparatus.

The modelling unit may be configured to control the virtual model to include in the virtual environment a virtual object functioning as a guide for at least a part of the virtual apparatus.

The modelling unit may be configured to control the virtual model so that at least a part of the virtual environment or virtual apparatus is resized compared to the corresponding part of the real-world environment or real-world apparatus.

The modelling unit may be configured to control the virtual model so that at least a part of the virtual environment or virtual apparatus is resized relative to another part of the virtual environment or virtual apparatus compared to the corresponding parts of the real-world environment or real-world apparatus.

The degree of resizing of the part of the virtual environment or virtual apparatus may be based on uncertainty in a measurement of the corresponding part of the real-world environment or real-world apparatus and/or a time delay between the movement/actuation of the virtual apparatus and the movement/actuation of the real-world apparatus.

The resized part may be enlarged/inflated or shrunken/smaller than the corresponding part of the real-world environment or real-world apparatus.

(To prevent collisions involving the real-world apparatus) The modelling unit may be configured to control the virtual model so that at least a part of the virtual environment or virtual apparatus is inflated/enlarged compared to the corresponding part of the real-world environment or real-world apparatus.

The degree of inflation/enlargement may be based on uncertainty in a measurement of the corresponding part of the real-world environment or real-world apparatus and/or a time delay between the movement/actuation of the virtual apparatus and the movement/actuation of the real-world apparatus.

The measurement may be a measurement of at least one of a position, an orientation, and a speed/velocity.

The modelling unit may be configured to control the virtual model to include a (repulsive or attractive) forcefield at least partially surrounding at least a part of the virtual environment or virtual apparatus, and to control the movement of the virtual apparatus in accordance with the forcefield (when a part of the virtual environment or virtual apparatus enters or is in the forcefield).

The modelling unit may be configured to control the virtual model to include a (repulsive or attractive) forcefield at least partially surrounding at least a part of the virtual environment or virtual apparatus.

The modelling unit may be configured to control the movement/actuation of the virtual apparatus to, when a part of the virtual environment or virtual apparatus is within the forcefield, move the part of the virtual environment or virtual apparatus out of the forcefield.

The modelling unit may be configured to: control the virtual model to include a (repulsive) forcefield at least partially surrounding at least a part of the virtual environment; and control the movement/actuation of the virtual apparatus to, when a part of the virtual apparatus is within the forcefield, move the part of the virtual apparatus out of the forcefield.

The modelling unit may be configured to: control the virtual model so that the forcefield is stronger closer to the part of the virtual environment or virtual apparatus it surrounds; and control the movement/actuation of the virtual apparatus according to the strength of the forcefield.

The modelling unit may be configured to control the virtual model so that the forcefield causes at least one of the following effects (to the virtual apparatus) when (a part of) the virtual apparatus is within/inside the forcefield: attraction; repulsion; resistance to movement; viscosity; vibration.

The input data may be provided by a machine learning model.

The modelling unit may be configured to train the machine learning model in a training phase.

In the training phase, the modelling unit may not control the real-world apparatus.

The input data may comprise at least one virtual constraint to be modelled in the virtual model by the modelling unit and/or movement/actuation information/instruction for the virtual apparatus, and the modelling unit may be configured to control the movement/actuation of the virtual apparatus according to the at least one virtual constraint and/or movement/actuation information/instruction.

The modelling unit may be configured to model a moving virtual object in the virtual environment corresponding to a moving real-world object in the real-world environment (based on the real-world data), and to predict a path of the moving virtual object and control the movement/actuation of the virtual apparatus based on the predicted path of the moving virtual object.

The modelling unit may be configured to make the prediction of the path of the virtual moving object at each of a plurality of time steps, wherein the prediction at each time step is based on updated real-world data (of the moving real-world object as it moves in the real-world environment).

The modelling unit may be configured to predict a path of (a part of) the virtual apparatus and control the movement/actuation of the virtual apparatus based on the predicted path.

The modelling unit may be configured to make the prediction of the path at each of a plurality of time steps, wherein the prediction at each time step is based on updated real-world data.

The (user) input data may comprise information indicating which of a plurality of parts of the virtual apparatus is to be controlled based on the (user) input data.

The (user) input data may comprise first (user) input data for affecting movement/actuation of a first part of the virtual apparatus and second (user) input data for affecting movement/actuation of a second part of the virtual apparatus.

The modelling unit may be configured to control the virtual apparatus based on the first and second (user) input data simultaneously (when first (user) input and second (user) input corresponding to the first and second (user) input data are received (by the input device) simultaneously).

The modelling unit may be configured to: display the virtual model on a display; display in the displayed virtual model a cursor, and to control the movement of the cursor based on the (user) input data; and when the cursor in the virtual model is within a threshold distance of a part of the virtual apparatus in the virtual model, and when the (user) input data includes a control indication, control the movement/actuation of the part of the virtual apparatus based on the (user) input data.

The modelling unit may be configured to display the virtual model on a display.

The system may comprise the display.

The modelling unit may be configured to implement a cursor-based control scheme for controlling the virtual apparatus based on the (user) input data.

The modelling unit may be configured to display in the displayed virtual model a cursor, and to control the movement of the cursor based on the (user) input data.

The modelling unit may be configured to, when the cursor in the virtual model is within a threshold distance of a part of the virtual apparatus in the virtual model, and when the (user) input data includes a control indication, control the movement/actuation of the part of the virtual apparatus based on the (user) input data.

The modelling unit may be configured to display the virtual model on the display as virtual reality, VR (and wherein the display is a VR headset).

The modelling unit may be configured to display the virtual model on the display according to a scale (defining a size of the displayed virtual model compared to the real-world apparatus and real-world environment).

The modelling unit may be configured to display the virtual model as part of a graphical user interface, GUI.

The (user) input data may correspond to (user) input received via interaction with the GUI.

The modelling unit may be configured to display a virtual control panel.

The virtual apparatus may comprise a plurality of component/subordinate virtual apparatuses and the real-world apparatus may comprise a plurality of component/subordinate real-world apparatuses.

The modelling unit may be configured to control the plurality of component/subordinate virtual apparatuses based on the (user) input data independently of each other.

The modelling unit may be configured to control the plurality of component/subordinate virtual apparatuses based on the (user) input data according to a shared world center.

The modelling unit may be configured to receive pre-control real-world data relating to the real-world environment, and the control of the virtual model may be (partially) based on the pre-control real-world data.

The modelling unit may be configured to receive pre-control real-world data in a pre-control phase preceding the control of the virtual model.

The modelling unit may be configured, when a new real-world object enters the real-world environment, to receive pre-control real-world data relating to the new real-world object.

The pre-control real-world data may comprise image data and/or video data and/or laser scanning data and/or mass data and/or center of mass data and/or surface friction data and/or surface stiffness data and/or force sensor data.

The real-world apparatus may comprise a robot.

The real-world apparatus may comprise an industrial robot.

The real-world apparatus may comprise a robot for use in assistive care/rehabilitation.

The real-world apparatus may comprise a robot for use in a nuclear reactor.

The real-world apparatus may comprise a robot for use in a warehouse or workplace.

The real-world apparatus may comprise a robot for use in space.

According to a second aspect of the present invention, there is disclosed herein a system comprising the modeling unit of the second aspect and further comprising: the real-world apparatus; and an input device configured to receive (user) input and to output to the modelling unit the (user) input data based on the (user) input.

The system may comprise at least one sensor configured to sense the real-world data.

The system may comprise a controller configured to receive the control signal and to control the real-world apparatus based on the control signal.

The input device may be configured to output (haptic) feedback based on the movement/actuation of the virtual apparatus and/or one or more forces acting on the virtual apparatus in the virtual model.

The input device may be configured to output (haptic) feedback to represent a collision of (at least a part of) the virtual apparatus with an element of the virtual environment and/or resistance/impedance to movement/actuation of the virtual apparatus.

The input device may be configured to output haptic feedback to represent a collision of at least a part of the virtual apparatus with an element of the virtual environment and/or resistance/impedance to movement of at least a part of the virtual apparatus, wherein the haptic feedback may depend on a surface with which the part of the virtual apparatus collides or which resists/impedes the movement of the part of the virtual apparatus.

The input device may be configured to output a first haptic feedback when the part of the virtual apparatus collides with or is impeded by a first surface of the virtual environment and output a second haptic feedback when the part of the virtual apparatus collides with or is impeded by a second surface of the virtual environment.

The input device may be configured to output a first haptic feedback when the part of the virtual apparatus collides with or is impeded by a first surface of the virtual environment and output a second haptic feedback when the part of the virtual apparatus collides with or is impeded by another part of the virtual apparatus.

The first and second haptic feedback may differ in strength and/or frequency of vibration.

The input device may be configured to output (haptic) feedback based on the movement/actuation of the real-world apparatus.

The input device may be configured to output the (haptic) feedback based on the movement/actuation of the real-world apparatus weighted relative to the (haptic) feedback output based on the movement/actuation of the virtual apparatus.

The input device may be configured to output (haptic) feedback based on the movement/actuation of the real-world apparatus weighted relative to the (haptic) feedback output based on the movement/actuation of the virtual apparatus.

The system may comprise at least one force sensor mounted on the real-world apparatus.

The system/at least one sensor may comprise at least one of at least one camera, at least one laser scanner, at least one weighing scale, at least one contact probe, at least one force sensor, at least one position sensor, and at least one velocity sensor.

The input device may be configured to receive first (user) input for affecting movement/actuation of a first part of the virtual apparatus and second (user) input for affecting movement/actuation of a second part of the virtual apparatus.

The input device may be configured to output the (haptic) feedback based on which of the plurality of parts of the virtual apparatus is to be controlled based on the (user) input data.

The input device may include a clutch functionality and the control indication may correspond to engagement of a clutch in the clutch functionality.

The input device may comprise a plurality of component input devices (capable of simultaneous use by the same or different users).

At least one sensor may be configured to sense the pre-control real-world data.

The system may comprise at least one pre-control sensor to sense the pre-control real-world data.

The pre-control sensor may comprise at least one of at least one camera, at least one laser scanner, at least one weighing scale, and at least one contact probe and at least one force sensor.

The system may comprise the real-world apparatus.

According to a third aspect of the present invention, there is disclosed herein a computer-implemented method comprising: controlling a virtual model of a virtual apparatus in a virtual environment corresponding to a real-world apparatus in a real-world environment; receiving real-world data of the real-world apparatus and (user) input data; and outputting a control signal to control the real-world apparatus, wherein the computer-implemented method further comprises: controlling the virtual apparatus based on the real-world data so that movement/actuation of the real-word apparatus and/or one or more forces applied to the real-world apparatus represented in the real-world data affect movement/actuation of the virtual apparatus; controlling the virtual apparatus based on the (user) input data so that the (user) input data affects movement/actuation of the virtual apparatus; and (automatically) controlling the real-word apparatus based on the virtual apparatus so that movement/actuation of the virtual apparatus governs/controls/affects movement/actuation of the real-world apparatus.

According to a fourth aspect of the present invention, there is disclosed herein a computer program which, when run on a computer, causes the computer to carry out a method comprising: controlling a virtual model of a virtual apparatus in a virtual environment corresponding to a real-world apparatus in a real-world environment; receiving real-world data of the real-world apparatus and (user) input data; and outputting a control signal to control the real-world apparatus, wherein the computer program further causes the computer to carry out as part of the method: controlling the virtual apparatus based on the real-world data so that movement/actuation of the real-word apparatus and/or one or more forces applied to the real-world apparatus represented in the real-world data affect movement/actuation of the virtual apparatus; controlling the virtual apparatus based on the (user) input data so that the (user) input data affects movement/actuation of the virtual apparatus; and (automatically) controlling the real-word apparatus based on the virtual apparatus so that movement/actuation of the virtual apparatus governs/controls/affects movement/actuation of the real-world apparatus.

Features of any aspect/embodiment may apply to any other aspect/embodiment. For example, features of any of the method, computer program, and apparatus/system aspects/embodiments may apply to any method, computer program, and apparatus/system aspects/embodiments.

Reference will now be made, by way of example, to the accompanying drawings, in which:
Figure 1 is a diagram illustrating a system;
Figure 2 is an illustration of virtual and real-world environments;
Figure 3 is a diagram illustrating a system;
Figure 4 is an illustration of virtual and real-world environments;
Figure 5 is an illustration of virtual and real-world environments;
Figure 6 is an illustration of virtual and real-world environments;
Figure 7 is an illustration of virtual and real-world environments; and
Figure 8 is a diagram illustrating an apparatus.

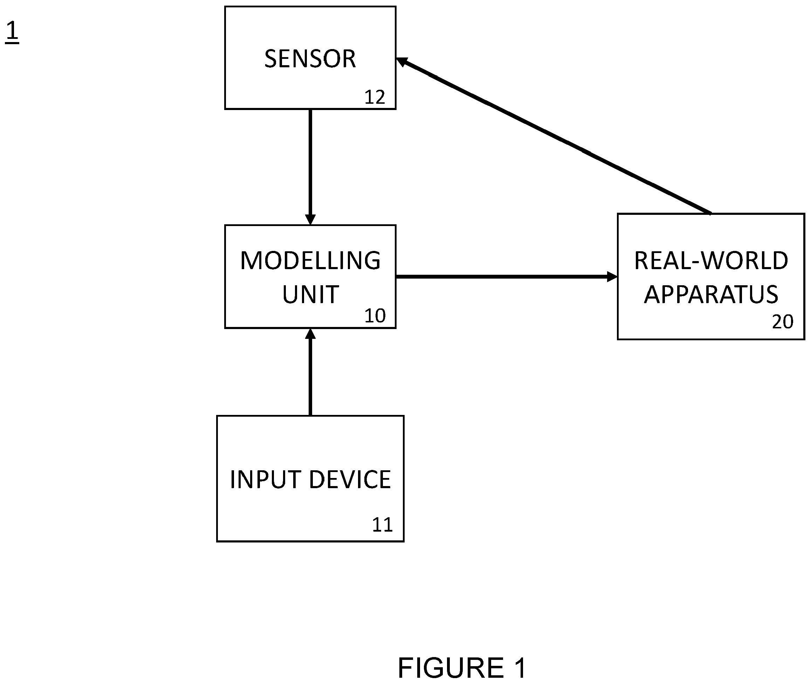

Figure 1 is a schematic diagram of a system 1 according to an example. The system 1 comprises a modelling unit 10, an input device 11, a sensor 12, and a real-world apparatus 20. Aspects/embodiments of the invention may be encompassed by the modelling unit 10 alone.

The modelling unit 10 is configured to control a virtual model of a virtual apparatus in a virtual environment corresponding to the real-world apparatus 20 in a real-world environment. That is, the real-world apparatus 20 exists in its environment, which may for example be an industrial workspace or a warehouse or another environment (depending on what the real-world apparatus 20 is being used for), and this environment is referred to as a real-world environment (to differentiate it from the virtual environment which is modelled by the modelling unit 10). The modelling unit models the virtual apparatus in the virtual environment corresponding to the real-world apparatus 20 in the real-world environment. In some examples the real-world apparatus 20 is a robot.

The modelling unit 10 is configured to receive real-world data of the real-world apparatus. That is, the modelling unit 10 receives real-world data from the sensor 12, which senses the real-world data of the real-world apparatus. The modelling unit 10 is also configured to receive input data, which may be referred to as user input data. In an example, a user (which may be a human user or a machine) provides user input to the input device 11 and the input device 11 transmits to the modelling unit 10 user input data based on the user input. User input and user input data may be referred to herein as input and input data, respectively.

The modelling unit 10 is configured to control the virtual apparatus based on the user input data so that the user input data affects movement/actuation of the virtual apparatus. For example, if the user provides user input to the input device 11 to move an arm of the virtual apparatus, the modelling unit controls the virtual apparatus so that the arm of the virtual apparatus moves according to the user input.

The modelling unit 10 is configured to output a control signal to control the real-world apparatus 20, as indicated by the arrow from the modelling unit 10 to the real-world apparatus 20. The modelling unit 10 controls the real-word apparatus 20 based on the virtual apparatus so that movement/actuation of the virtual apparatus governs the movement/actuation of the real-world apparatus 20.

In other words, the modelling unit 10 models the virtual apparatus in the virtual environment and controls this virtual model to move the virtual apparatus according to the user input data, and the modelling unit 10 automatically controls (via a control signal) the real-world apparatus 20 to emulate the movement of the virtual apparatus. In this way, the user's control of the real-world apparatus 20 is effected by the modelling unit 10 via the virtual model. In this way, the modelling unit 10 and the system 1 may considered to differ from conventional approaches to robotic control in which user input controls a real robot in a more direct manner. The real-world apparatus may be considered to approximate the virtual apparatus, in the sense that it is controlled so that it moves in the same way as the virtual apparatus.

This control scheme (controlling the real-world apparatus 20 to replicate/approximate the movement of the virtual apparatus) is useful for a number of reasons, for example due to the ability to include in the virtual model virtual objects which prevent the virtual apparatus from movement to a particular location which corresponds to an "out-of-bounds" zone in the real-world environment which is not necessarily blocked any real-world object, as described later below, among many other advantages.

The modelling unit 10 is further configured to control the virtual apparatus based on the real-world data so that movement/actuation of the real-word apparatus 20 and/or one or more forces applied to the real-world apparatus 20 represented in the real-world data affect movement/actuation of the virtual apparatus. That is, the modelling unit 10 outputs the control signal to control the virtual apparatus based on the real-world data.

For example, whilst the virtual model corresponds to the real-world apparatus 20 in its real-world environment, the real-world apparatus 20 may not always move in exactly the same way as the virtual apparatus when instructed/controlled (by the control signal) to do so (e.g. due to something in the real-world environment blocking the movement/actuation of the real-world apparatus 20 which was not modelled or incorrectly modelled in the virtual environment, or due to some other error or problem in the movement/actuation of the real-world apparatus 20). In such cases, control of the virtual apparatus based on the real-world data means that the virtual apparatus will also be prevented from moving or appear to suffer the same problem or error in its movement/actuation. This is useful so that the modelling unit 10 'knows' where the real-world apparatus 20 is and what it is doing, otherwise the correspondence between the virtual apparatus and the real-world apparatus might decrease.

The control of the virtual apparatus based on the real-world data is not essential. As mentioned above, aspects/embodiments of the invention may be encompassed by the modelling unit 10 alone. The modelling unit 10 may receive the input data and real-world data in a manner other than that illustrated in Figure 1 and the sensor 12 and input device 11 are not essential.

Movement of the virtual apparatus 20A or the real-world apparatus 20 may refer to movement and/or actuation of the virtual/real-world apparatus as a whole or of one or more parts/elements/components thereof.

The virtual model may be considered a digital twin of the real-world apparatus 20 and the real-world environment. The methodology disclosed herein may be referred to as "digital twin in the loop", or DTIL, indicating that the digital twin (the virtual model) is "in the loop", i.e. is at the heart of the control scheme in the sense that the user input affects the movement of the virtual apparatus and the movement of the virtual apparatus governs the movement of the real-world apparatus 20.

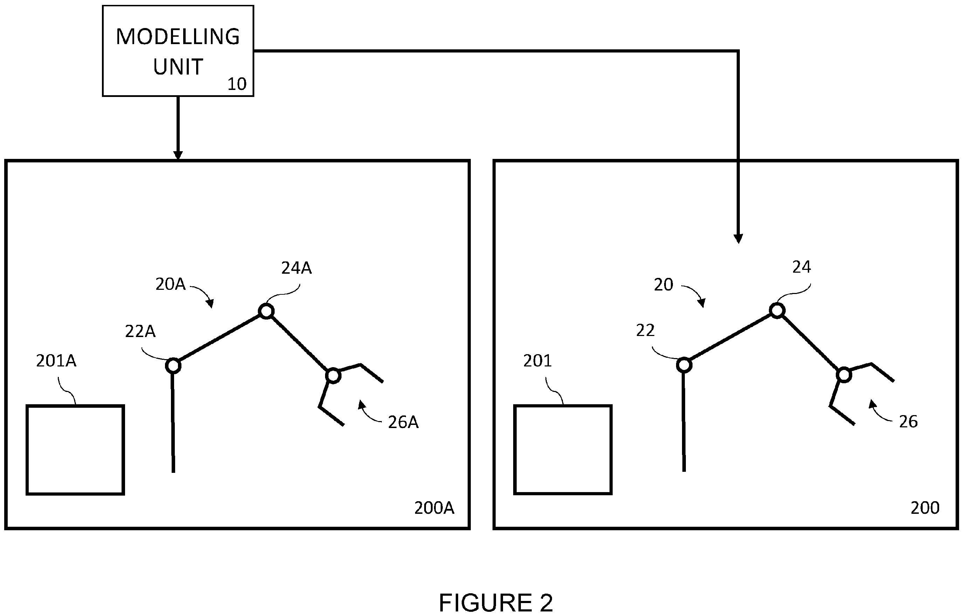

Figure 2 is a diagram to aid understanding of the modelling unit 10 and the system 1. Figure 2 illustrates a representation of the virtual model 200A comprising the virtual apparatus 20A in a virtual environment. The virtual environment is illustrated as comprising virtual object 201A. Figure 2 also illustrates the real-world view 200 of the real-world apparatus 20 and the real-world environment, which is illustrated as comprising the real-world object 201.

The modelling unit 10 controls the virtual model 200A and controls the real-world apparatus 20 as described above and as shown in Figure 2. As described above, the modelling unit 10 controls the virtual apparatus 20A based on the user input data so that the user input data affects the movement of the virtual apparatus 20A. The modelling unit 10 controls the real-world apparatus 20 based on the virtual apparatus 20A so that the movement of the virtual apparatus 20A governs the movement of the real-world apparatus 20. The modelling unit 10 also controls the virtual apparatus 20A based on the real-world data so that movement of the that movement of the real-world apparatus 20 and/or one or more forces applied to the real-world apparatus 20 affect the movement of the virtual apparatus 20A.

The virtual apparatus 20A may be considered a simulation of the real-world apparatus 20. The virtual environment may be considered a simulation of the real-world environment. As mentioned above, the real-world apparatus 10 may be considered to approximate the virtual apparatus 20A, in the sense that it is controlled so that it moves in the same way as the virtual apparatus 20A. Similarly, the virtual apparatus 20A may be considered to approximate the real-world apparatus 20 in the sense that the movement of the real-world apparatus 20 and force applied thereto affect the virtual apparatus's 20A movement. The virtual environment may be considered to approximate the real-world environment and vice versa. For example, the virtual environment may be considered as an effort to try to replicate the real-world environment (although intentional changes may be included as described below), and also the real-world environment may be considered as an effort to replicate the virtual environment (e.g. if the virtual apparatus 20A were to be modelled as if in space, the real-world apparatus 20 could be mounted on an air hockey table which is almost frictionless).

The real-world apparatus 20 in the example of Figure 2 comprises elements 22, 24, and 26. The virtual apparatus 20A in the example of Figure 2 comprises corresponding elements 22A, 24A, and 26A. The elements 22-26 are controlled based on the movement of the corresponding elements 22A-26A. In an example, user input data may instruct the movement of just the element 26A (which may be referred to as an end effector) and the modelling unit 10 controls the movement of the apparatus 20A based on this user input data and based on the virtual environment - for example, a part of the virtual apparatus 20A may be restricted in its movement by a virtual object. The modelling unit 10 may feedback the prevention of movement and/or may control the apparatus 20A to move in a different way so that the end effector moves as instructed by the user input data. The modelling unit 10 controls the elements 22-26 of the real-world apparatus based on the movement of the elements 22A-26A of the virtual apparatus 20A.

In the above example, whilst the user input data specified movement of the element 26A, the other elements 22A and 24A were described as being left free to move. In other cases, the element 22A and/or the element 24A may be controlled to remain in a fixed position as the element 26A is instructed to be moved. These considerations could of course apply to any of the elements 22A, 24A, and 26A. Whether an element of the virtual apparatus 20A is to be fixed or allowed to move freely in the control of the virtual apparatus 20A to move another element or elements may be considered part of the user input data.

In some examples, there is a defined linkage between corresponding elements 22A & 22, 24A & 24, 26A & 26 of the virtual apparatus 20A and the real-world apparatus 20. In such examples the modelling unit 10 controls the real-word apparatus 20 (via the control signal) based on the virtual apparatus 20A and the defined linkage between the corresponding elements 22A & 22, 24A & 24, 26A & 26, and controls the virtual apparatus 20A based on the real-world data and the defined linkage between the corresponding elements 22A & 22, 24A & 24, 26A & 26.

The defined linkage may comprise a "rigid" relationship in the sense that motion and force on an element of the virtual apparatus 20A is applied in the same way to the corresponding element of the real-world apparatus 20. In other examples, the defined linkage comprises a mass-spring-damper relationship. Taking the corresponding elements 22A and 22, as the element 22A is controlled to move by the modelling unit 10 the element 22 is controlled to move by the modelling unit 10 as if the two elements are connected in a mass-spring-damper relationship. That is, the element 22 of the real-world apparatus 20 may be considered to be 'dragged' along with (just 'behind' (in time)) the element 22A of the virtual apparatus 20A as if connected to the element 22A by a mass-spring-damper connection. Of course, the virtual apparatus 20A is not a real, physical entity and thus there is no (and cannot be any) actual physical connection between the virtual apparatus 20A and the real-world apparatus 20. Instead, the defined linkage in the form of a mass-spring-damper relationship is a mathematical relationship indicating how the real-world apparatus 20 is controlled (by the modelling unit 10) based on the movement of the virtual apparatus 20A.

Furthermore, in some examples the defined linkage comprises a rotary mass-spring-damper relationship, in the sense that the angles of joints of the virtual apparatus 20A may be linked to the angles of joints of the real-world apparatus 20. That is, taking the corresponding elements 22A and 22, as the element 22A is controlled by the modelling unit 10 so that the joint angle is adjusted, the element 22 is controlled by the modelling unit 10 so that the joint angle of the element 22 is adjusted as if the two elements are connected in a rotary mass-spring-damper relationship. That is, the rotation of element 22 of the real-world apparatus 20 may be considered to be effected along with (just 'behind' (in time)) the rotation of the element 22A of the virtual apparatus 20A as if connected to the element 22A by a rotary mass-spring-damper connection. Corresponding elements in the virtual and real-world apparatuses 20A and 20 may comprise different defined linkages to each other - that is, not all the defined linkages need to be of a particular type (e.g. rigid, mass-spring-damper, rotary mass-spring-damper).

Corresponding considerations apply when considering the modelled movement of the virtual apparatus 20A based on the real-world data of the real-world apparatus 20. In the case of a mass-spring-damper defined linkage, the movement of the real-world apparatus 20 relative to the modelled movement of the virtual apparatus 20A is such that there is some `flex' in the relative movement.

Considering a situation in which the real-world apparatus 20 is controlled to move based on the modelled movement of the virtual apparatus 20A but runs into a physical obstruction in the real-world environment which prevents the real-world apparatus from moving and which was not modelled in the virtual environment of the virtual model. Thus the virtual apparatus 20A is controlled to move but the real-world apparatus 20 is prevented from doing so. The control of the virtual apparatus 20A based on the real-world data is such that the virtual apparatus 20A is caused to move (modelled as moving) to a position in the virtual environment corresponding to the position of the real-world apparatus 20 in the real-world environment. This modelled movement of the virtual apparatus 20A is controlled to occur in accordance with the mass-spring-damper defined linkage. That is, the modelled movement is controlled to occur with some "flex" in the relative movement of the virtual apparatus 20A compared to the movement of the real-world apparatus 20.

A mass-spring-damper defined linkage between corresponding elements 22A & 22, 24A & 24, 26A & 26 of the virtual apparatus 20A and the real-world apparatus 20 may aid with stability of the real-world apparatus 20 and/or of the virtual apparatus 20A and/or of the correspondence between the two. The mass-spring-damper defined linkage may be considered a safety feature that prevents dangerous feedback between the virtual and real-world apparatuses 20A and 20 and prevents consequent oscillation of the real-world apparatus 20 (which could be dangerous). That is, due to the "flex" in the relative movement of the virtual apparatus 20A compared to the movement of the real-world apparatus 20 there is less risk of the modelling unit 10 "overcorrecting" movement of the virtual or real-world apparatuses 20A, 20, and therefore less risk of consequent oscillation which could be dangerous.

The above advantages of a mass-spring-damper defined linkage also apply to a rotary mass-spring-damper defined linkage. A rotary mass-spring-damper defined linkage may be considered a specific example of a mass-spring-damper defined linkage,

In some examples, additionally or alternatively, a defined linkage exists between the virtual apparatus 20A and the input device 11, as described in more detail later below.

Whilst in Figure 2 the virtual apparatus 20A is modelled as comprising elements corresponding closely to the elements of the real-world apparatus 20, in other cases the correspondence between elements may be more approximate. For example, in some examples a part of the real-world apparatus 20 which is flexible may be represented in the virtual apparatus 20A as one or more (virtual) joints (though not controllable directly to move based on user input data like virtual joints which correspond to real-world joints). Furthermore, deterioration of joints/elements in the real-world apparatus 20 may be modelled in the virtual apparatus 20A. The ability to effectively model flex and deterioration of joints/elements of the real-world apparatus 20 in the virtual apparatus 20A facilitates improved control of the real-world apparatus 20 and is generally not possible (or at least much more difficult) in conventional methodologies for controlling e.g. robots.

The virtual model may comprise a simulation or model run by a physics engine, for example of the like used for videogame modelling. The physics engine thus 'automatically' solves the model to incorporate the user input data (and the real-world data) into the virtual model, at each time step. A physics engine running the virtual model may operate at a high frequency to improve the responsiveness and/or accuracy of the system 1, for example at 1kHz or somewhere in the range of 500Hz-3kHz. That is, running the model at a high frequency can ensure that the real-world apparatus's 20 ability to move and sense is matched and exceeded by the ability of the physics engine running the virtual model to calculate, and can ensure that the virtual model is able to be run faster than the real-world apparatus 20 can sense or act. This helps to improve the stability of the real-world apparatus 20 and to provide realistic haptic feedback at a high resolution. A physics engine running the model may be included in the modelling unit 10. The control signal for controlling the real-world apparatus 20 may specifically control the movement of a plurality of elements of the real-world apparatus 20, rather than controlling only e.g. the end effector and relying on some further computation at the apparatus (e.g. in an apparatus control module) for control of the other elements of the real-world apparatus 20.

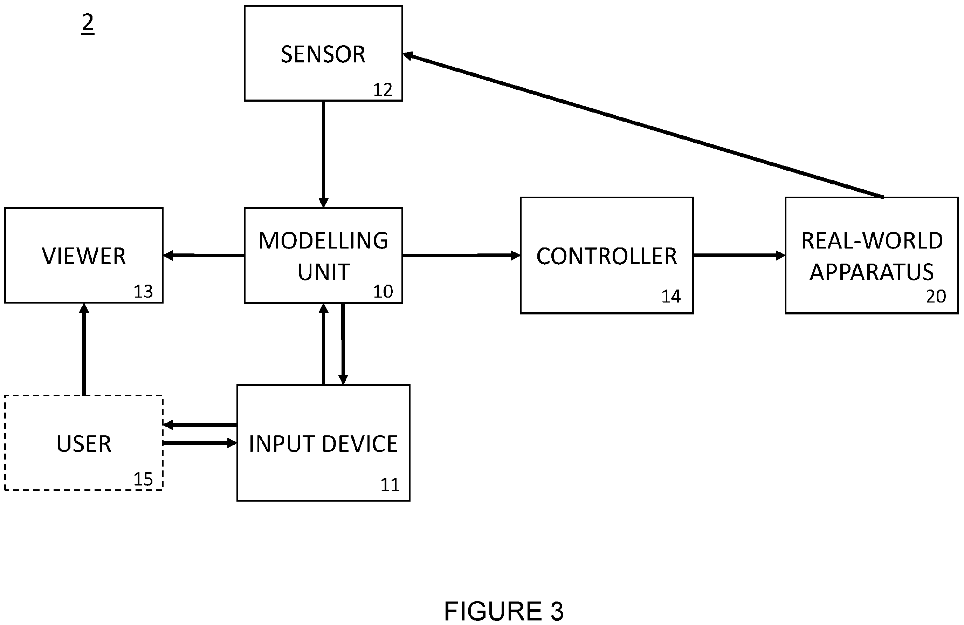

Figure 3 is a schematic diagram of a system 2. The system 2 may be considered an alternative or more detailed version of the system 1 according to an example.

The system 2 comprises the modelling unit 10, the input device 11, the sensor 12, and the real-world apparatus 20. Duplicate description of these elements which are also present in the system 1 will be omitted.

The system 2 additionally comprises a controller 14. The controller 14 receives the control signal output by the modelling unit 10 for controlling the real-world apparatus 20 and based on the control signal controls the real-world apparatus 20. The controller 14 may be a part of the real-world apparatus 20. For example, the controller 14 may be a robotic controller or control unit associated with the real-world apparatus 20.

The system 2 additionally comprises a viewer 13 and illustrates a user 15 (which is not necessarily a part of the system 2 as indicated by the dashed line box). The viewer 13 may comprise a display for displaying a representation of the virtual model. The user 15 (which may be a human user or a machine user) interacts with the viewer 13, e.g. to view the representation of the virtual model displayed there.

The user 15 interacts with the input device 11 to provide user input. The input device 11 transmits to the modelling unit 10 user input data based on the user input. In some examples, the modelling unit 10 outputs feedback data to the input device 11 and the input device 11 outputs feedback to the user 15 based on the feedback data. The feedback output by the input device 11 is based on the movement of the virtual apparatus 20A and/or one or more forces acting on the virtual apparatus 20A in the virtual model. In some examples this feedback comprises haptic feedback and is described in more detail later below.

The modelling unit 10 may be configured to control the virtual model so that at least a part of the virtual environment or virtual apparatus 20A is resized relative to another part of the virtual environment or virtual apparatus 20A compared to the corresponding parts of the real-world environment or real-world apparatus 20. That is, a part of the virtual environment or virtual apparatus 20A may be enlarged or shrunk (relative to another part of the virtual environment or virtual apparatus 20A) compared to the corresponding parts of the real-world environment or real-world apparatus 20.

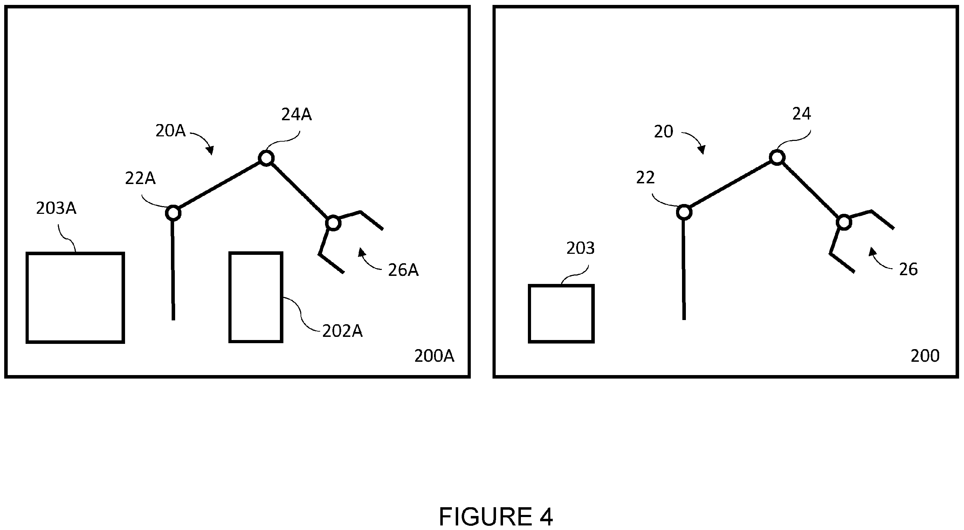

Figure 4 is a diagram to aid understanding in this respect. Figure 4 illustrates a representation of the virtual model 200A comprising the virtual apparatus 20A in a virtual environment and the real-world view 200 of the real-world apparatus 20 and the real-world environment. The real-world environment comprises a real-world object 203. The virtual environment comprises virtual objects 203A and 202A. The virtual object 203A corresponds to the real-world object 203 but is larger than the real-world object 203. That is, the modelling unit 10 control the virtual model to enlarge the virtual object 203A relative to another part of the virtual environment or virtual apparatus 20A compared to the real-world object 203 of the real-world environment.

Such enlargement may be useful so that the virtual apparatus 20A contacts the virtual object 203A "before" the real-world apparatus 20 contacts the corresponding real-world object 203. That is, as the virtual apparatus 20A contacts the virtual object 203A the real-world apparatus 20 may still be some distance away from contacting the real-world object 203. In the situation that the virtual object 203A is an object whose collision with the virtual apparatus 20A is to be avoided, the virtual apparatus 20A will be controlled to stop (or avoid contact/collision in another manner) when (or before) it contacts the virtual object 203A and thus the real-world apparatus 20 will be controlled to stop (or move) by the modelling unit 10 based on the movement of the virtual apparatus 20A. In this way, the risk of collision between the real-world apparatus 20 and the real-world object 203 is reduced.

The degree of enlargement of the part of the virtual environment or virtual apparatus 20A may be based on uncertainty in a measurement of the corresponding part of the real-world environment or real-world apparatus 20 and/or a time delay between the movement/actuation of the virtual apparatus 20A and the movement/actuation of the real-world apparatus 20. The measurement may be for example a measurement of a position, an orientation, and/or a speed/velocity. In this way, the enlargement may help to account for measurement errors which might otherwise lead to increased risk of collision of the real-world apparatus 20 with a part of the real-world environment. Alternatively and/or additionally, the degree of resizing (e.g. enlargement) may be defined and changed by a user, for example while providing user input to effect control of the virtual apparatus 20A.

In other words, and considering an example in which the real-world apparatus 20 is a robot, a position discrepancy between the simulated robot kinematics (the movement of the virtual apparatus 20A) and the physical kinematics of the robot (the movement of the real-world apparatus 20) exits due to the time delay between the simulated robot (virtual apparatus 20A) changing position and the physical robot (real-world apparatus 20) moving to minimize the position error as the physical robot is bound by real world physics and cannot produce instantaneous motion. This error and any other measurement errors (e.g. mechanical flex or joint slop which may not be accounted for in the virtual model) accumulate to mean the simulation/virtual model does not know at all times precisely where the physical robot is which could result in unwanted real-word collisions.

To address this, a virtual object corresponding to a real-world object which could cause a collision has a slightly inflated collision surface wherever contact must be strictly avoided - i.e., the virtual object is enlarged as described above. This may apply to multiple or all of the virtual surroundings corresponding to real-world surroundings with which contact of the real-world apparatus 20 is to be avoided.

When two robots are interacting and potentially colliding, the error due to the time delay may be doubled. A useful implementation approach is for the surface boundary representation between robot-robot collision to be larger than robot-static object collision. In other words, the virtual apparatus 20 (or at least a part thereof) may have to be enlarged as described above to a greater degree than virtual objects. In some examples, the inflation/enlargement is only applied to robot-robot (or apparatus-apparatus) interactions and not robot-object (or apparatus-object) interactions.

Even if virtual objects are not enlarged compared to the real-world objects, ignoring the effect of any measurement errors, the DTIL methodology still enables the avoidance of collisions in the real-world environment. This is because in the DTIL methodology the simulation/virtual model is run slightly ahead of the real world, because the input data is used by the modelling unit 10 to control the virtual apparatus and consequentially the real-world apparatus is controlled by the modelling unit 10 based on the movement of the virtual apparatus. Although only fractionally ahead this "temporal leading" can be beneficial in avoiding collisions of the real-world apparatus with real-world objects.

For example, considering as the virtual apparatus a multi-degree of freedom virtual robot being driven towards a target with a virtual obstacle in its path. In this example the virtual obstacle is representative of a corresponding real-world obstacle in the real-world environment, the collision of the real-world robot with which is to be avoided (but it could be a pure virtual obstacle). Because the simulated//virtual robot leads slightly, it collides with the virtual obstacle before the physical robot collides with the corresponding physical obstacle. The modelling unit 10 (i.e. the physics engine therein/used by the modelling unit 10) calculates forces that cause the simulated robot to bounce/slide/be dragged past the virtual obstacle without any penetration. The resulting motion in this case is that the virtual robot (and thus consequentially the physical) robot appears to "bend" around the virtual/physical obstacle on its way past.

As described above, a feature of the DTIL methodology is that, in general, a real-world robot is driven in joint space (i.e. the adjustable elements of the physical robot are controlled based on the movement of the corresponding adjustable elements of the virtual robot) and the control of the real-world robot by the modelling unit 10 based on the virtual model may replace any traditional inverse kinematic-style control system for converting World Space Force/Velocity/Position into joint space Torque/Velocity/Position - that is, converting an instructed movement of some part of the real-world robot to instructions for movement of the adjustable elements of the real-world robot to effect the instructed movement of the part concerned. It would not be possible to achieve at least some advantages of the DTIL methodology if the robot kinematics were updated using e.g. a robot manipulator's built-in controllers.

To control the physical robot based on the virtual/simulated robot, the physical robot's joint torques may be calculated to minimize the angular error between currented simulated joint angles and current measured physical joint angles at the specific moment in time when an update occurs. In a more sophisticated implementation of control of the physical robot based on the virtual/simulated robot, the joint trajectories the simulated robot has moved through are recorded (to a reasonably fine granularity) and the physical robot's controller is commanded to replicate the precise motions the that the simulated robot moved through rather than always minimizing the error in a straight line (in joint space). This more sophisticated implementation may prevent the physical robot "cutting corners" when the degree of separation between virtual and physical robot gets larger.

Returning to the technique of resizing virtual objects, in some cases it may be advantageous to "shrink" a virtual object or part of the virtual apparatus 20A. For example, for gripper-object collision, and considering other physical/real-world objects that are intended to come into contact with one another or with a part of the real-world apparatus 20 there is a benefit to maintaining a reduced surface boundary. In a virtual model, resizing may be applied in different ways to parts of the virtual apparatus 20A and virtual objects, for example some parts of the virtual apparatus 20A or virtual objects may be enlarged and others may be shrunk, including to different degrees. For example, a gripper of the real-world apparatus 20A may be shrunk whilst other elements thereof may be enlarged.

For example, in the case that the real-world apparatus 20 includes a gripper, a simulated enlarged collision boundary (that is, an enlarged virtual object to be gripped or a corresponding enlargement of the part concerned of the virtual apparatus 20A) could mean the gripper of the real-world apparatus 20 could never contact the real-world object. Instead, by shrinking a virtual object to be gripped or the corresponding part concerned of the virtual apparatus 20A, the chance of gripping may be increased. As with the enlargement, the degree of shrinking may be based on uncertainty in the measurement of the corresponding part of the real-world environment or real-world apparatus 20 and/or a time delay between the movement/actuation of the virtual apparatus and the movement/actuation of the real-world apparatus.

Furthermore, when a target grip width of a robotic gripper (as the real-world apparatus 20) is driven by positional error (between simulated and real gripper) the position error can give a proxy for the current grip force being applied in the real-world environment. Having a shrunken surface boundary can thus limit a maximum grip force that can be applied by the physical gripper.

In Figure 4, the virtual environment includes a virtual object 202A for which no corresponding real-world object exists in the real-world environment. Nonetheless, the real-world apparatus 20 under the control of the modelling unit 10 will behave as if a corresponding real-world object did exist in the real-world environment. That is, the virtual apparatus 20A under the control of the modelling unit 10 will not be able to move through the virtual object 202A, and the real-world apparatus 20 will move under the control of the modelling unit 10 based on the virtual apparatus 20A movement. The modelling unit 10, when controlling the virtual apparatus 20A may treat the virtual objects 202A and 203A in the same way (even though the virtual object 202A has no corresponding real-world object in the real-world environment).

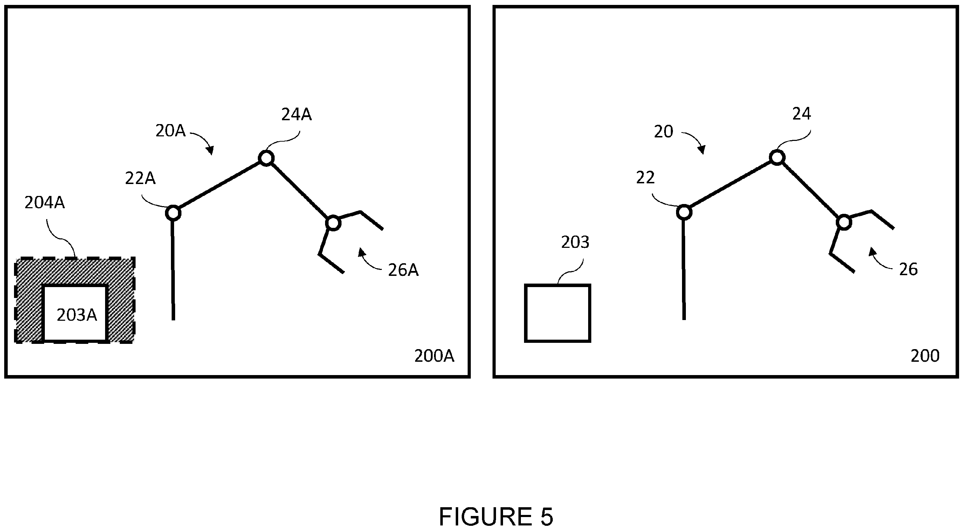

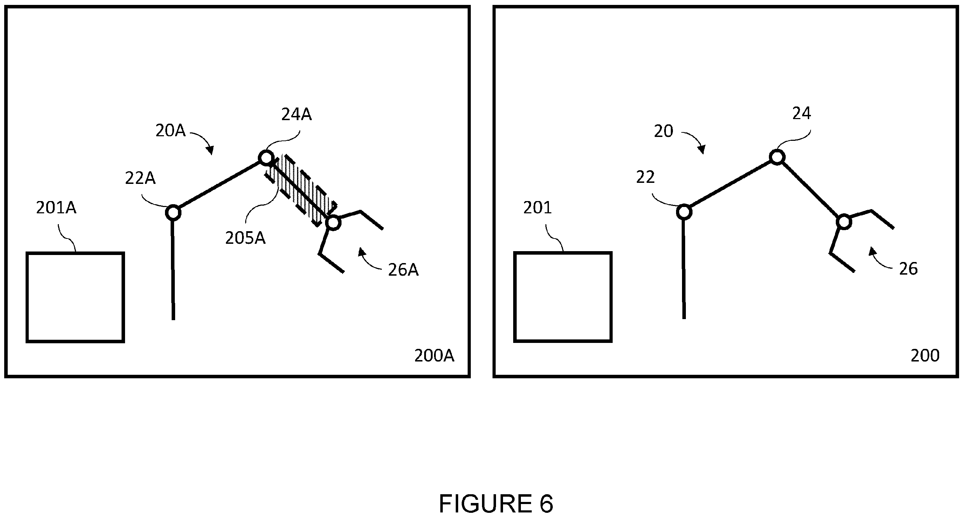

Figures 5 and 6 are diagrams illustrating the concept of including a forcefield around a virtual object or part of the virtual apparatus 20A. In some examples, the modelling unit controls the virtual model to include a forcefield at least partially surrounding at least a part of the virtual environment or virtual apparatus 20A. For example, in Figure 5 a virtual object 203A (corresponding to the real-world object 203) is (partially) surrounded by a forcefield 204A. Furthermore, for example, in Figure 6 a forcefield 205A surrounds a part of the virtual apparatus 20A in the virtual model.

Such a forcefield may be modelled/controlled to cause a number of effects to the virtual apparatus 20A when the virtual apparatus is inside the forcefield (or to the part of the virtual apparatus 20A which is inside the forcefield), or when a virtual object (of the virtual environment) is inside the forcefield, for example any of attraction, repulsion, resistance to movement, viscosity, and vibration/wobbling. The modelling unit controls the virtual apparatus 20A to move in accordance with the forcefield's effect when a part of the virtual apparatus 20A is inside the forcefield. Particular haptic feedback may be output by the input device 11 based on the effects of such forcefields, as described below.

For example, if the forcefield is repulsive, the modelling unit 10 is configured to control the movement/actuation of the virtual apparatus 20A to, when a part of the virtual environment or virtual apparatus is within the forcefield, move the other part of the virtual environment or virtual apparatus out of the forcefield.

The forcefield may be stronger the closer to the object surrounded by it. The modeling unit 10 may then control the movement of the virtual apparatus 20A according to the strength of the forcefield.

Of course, the real-world apparatus 20 under the control of the modelling unit 10 based on the movement of the virtual apparatus 20A may be considered to move as if the forcefield existed in the real-world environment.

Put another way, repulsion fields (forcefields) may add an enhancement by actively pushing linkages (or any part of a virtual apparatus 20A) out of a zone without necessarily completely preventing them from entering an area, and thus cause a corresponding effect in the real-world environment involving the real-world apparatus. Similar to a spring which only acts in certain directions, for example a repulsion field might always push the virtual apparatus 20A away in a fixed direction, allowing the virtual apparatus 20A to freely approach from one direction and then, once inside the field, push on the virtual apparatus 20A to expel it from the field (with a corresponding effect in the real-world apparatus 20. For example, such a constraint would be useful to help a multi-degree-of-freedom (multi-DoF) robot pass between obstacles without getting stuck. If the robot was being driven by a Cartesian force/trajectory applied to the end effector to drive it to a goal position (as in some conventional methodologies) it might be the case that a link or multiple links get "snagged" behind an obstacle that lies directly between the link and the direction of travel. If each virtual object corresponding to each obstacle emitted a repulsion field acting on the corresponding virtual robot (e.g. acting diagonally up, perpendicular to the goal direction) this would have the effect of gradually sliding the blocked linkages away from the obstacles. If subtle, a repulsion force field could even gradually rotate direction, causing the robot linkages to shift in different directions until they become free.

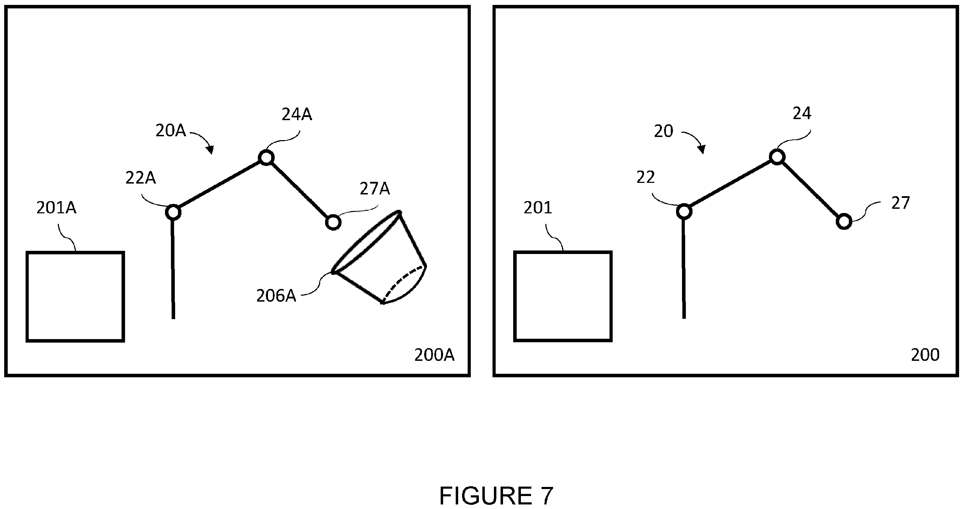

Figure 7 is a diagram illustrating the concept of a virtual guide. The modelling unit 10 may be configured to control the virtual model to include in the virtual surroundings a virtual object functioning as a guide for at least a part of the virtual apparatus 20A. For example, in Figure 7 the virtual environment includes a virtual object 206A which is a cone-shaped object. The virtual object 206A does not correspond to a real-world object in the real-world environment (as indicated in Figure 7 by the lack of such a corresponding real-world object in the view 200. The virtual object 206A is configured for guiding the element 27A of the virtual apparatus 20A to a particular location, and thereby (due to the control by the modelling unit 10 of the real-world apparatus 20) for guiding the element 27 of the real-world apparatus 20 to a particular location. For example, the element 27 may comprise a screwdriver or socket head and the particular location in the real-world environment may be a hole to have therein a screw or bolt inserted by the screw or socket driver. It will be appreciated that there are many possible useful applications for guiding a part of an apparatus to a particular location.

The modelling unit 10 may control the virtual model to incorporate one or more forcefields together with a virtual object functioning as a guide, for example to encourage the virtual apparatus 20A to move in the desired direction.

Virtual objects and forcefields modelled in the virtual model as described above may be considered examples of constraints, other examples of which exist. Herein, such constraints may be referred to virtual constraints or, simply, constraints.

Further examples of constraints that could be included in the virtual model include (in which "entity" means a part of the virtual apparatus or the virtual environment):
- maintaining a fixed distance and/or a fixed orientation between two entities in the virtual model;
- maintaining a minimum and/or maximum distance between two entities in the virtual model;
- maintaining a minimum and/or maximum orientation difference between two entities in the virtual model;
- maintaining a minimum and/or maximum vertical distance between two entities in the virtual model;
- maintaining a minimum and/or maximum distance between an entity in the virtual model and a fixed point in space in the virtual model;
- maintaining at least a part of the virtual apparatus at a fixed position (within the virtual environment).
- maintaining an orientation at the end-effector relative to gravity,

Controlling the virtual model to include virtual constraints may comprise adding mathematical functions/relationships to the simulated physics world (the virtual model) which form part of a global minimization problem for which a physics solver (in the modelling unit 10) computes a solution at each time step.

Examples of virtual constraints include springs connecting two objects, joints (prismatic, rotary), parametric boundaries, sphere/plane constraints. Such constraints prevent or maintain relative motion between two entities in the virtual model. These may correspond to standard constructs in a physics engine, however, once a full physics engine is embedded "in the loop" as in DTIL these constructs become very powerful robot control tools, both in terms of what can be achieved versus traditional algorithmic approaches to robotic control and the simplicity of adding and removing constraints.

In conventional systems involving non-kinematically matched tele-robotics, typically the remote robot has more DoF than are under direct control from the local controller. This has the tendency to result in the end effector position/velocity of the remote robot being well-defined but the linkages making up the kinematics drifting into undesirable configurations. The general DTIL solves the common issue of the remote robot's linkages causing unwanted collisions with other objects during operation (e.g. as described above). The addition of further constraints in the virtual model which do not directly mirror real-world objects in the real-world environment gives a greater degree of control over the robot (the real-world apparatus 20).

For example, considering a robotic arm, in conventional systems the "elbow" often drifts and, potentially could end up dragging on the floor over time even though the end effector is in the correct position/orientation (as determined by the control by a user). In the DTIL methodology disclosed herein, the addition of a plane constraint between the elbow joint and the floor (in the virtual model) would prevent the elbow dropping without unduly impacting the operator. This is because the modelling unit 10 would control the virtual apparatus so that the constraint was met in the virtual model and thus consequentially control the real-world apparatus based on the movement of the virtual apparatus.

As a further example considering a robotic arm, a sphere constraint locking the elbow to stay within a radius of a given point in the virtual model would have a similar effect as the plane constraint, allowing significant freedom of motion but ultimately preventing the elbow from dropping too low, or folding back on itself.

Virtual constraints can be set between any pair of moving virtual objects. For example, a virtual robot end-effector picking virtual objects off of a virtual flat platform on a tilt table in a virtual model could be limited by a constraint that ensures the orientation of the end effector and the platform remains constant regardless of the angle of the platform. The movement of the virtual robot in accordance with this constraint (as controlled by the modelling unit 10) would then follow through to the real-world robot due to the control thereof by the modelling unit 10 based on the movement of the virtual robot. From a user's perspective, this would reduce a very complex problem to a simple linear position task in the virtual model.

Virtual constraints may comprise rules for the virtual model which can be applied to limit forces applied more directly, or for example to stop the virtual apparatus 20A rotating objects, e.g. stopping a robot tipping over a flask/barrel of liquid.

Additionally, there may be the opportunity to map between virtual constraints and robot API (application programming interface) calls. For example, if a virtual constraint sets a joint to be locked in the virtual apparatus, the modelling unit 10 may output the control signal such that the appropriate robot API call is made to activate physical brakes and increase overall stiffness of the system. As an example of an API, an OEM (Oracle Enterprise Management) API may be considered.

A virtual constraint in the virtual model could also comprise a constraint on a modelled force in the virtual model. That is, the modelling unit 10 may control the virtual model so that the friction of at least one surface in the virtual environment or the virtual apparatus is higher or lower than the friction of the corresponding at least one surface of the real-world surroundings or the real-world apparatus.

A virtual constraint could be considered included in the user input or user input data and may be provided by the user using the input device 11 or another way (e.g. via a different input device).

As mentioned above, the input device 11 may output haptic feedback to the user based on the movement of the virtual apparatus. For example, the haptic feedback may represent a collision of the virtual apparatus with an element of the virtual environment and/or resistance/impedance to movement/actuation of the virtual apparatus.

The input device 11 may comprise any of a mouse and/or keyboard, a controller (e.g. a joystick or videogame-style controller), a pen (e.g. for moving in 3D space), a controller of the kind used in virtual reality or augmented reality systems, among other devices.

The haptic feedback may depend on a surface with which the part of the virtual apparatus collides or which resists/impedes the movement of the part of the virtual apparatus. For example, the input device 11 may output a first haptic feedback when the part of the virtual apparatus collides with or is impeded by a first surface of the virtual environment and output a second haptic feedback when the part of the virtual apparatus collides with or is impeded by a second surface of the virtual environment. This may allow the user (e.g. a human user) to discern a property of the part of the virtual environment that the virtual apparatus is colliding with (and it will be appreciated that this is indicative of the real apparatus's movement). The haptic feedback may be different if a part of the virtual apparatus collides with another part of the virtual apparatus rather than e.g. a part of the virtual environment. The haptic feedback output by the input device may differ in its strength or frequency of vibration. The haptic output may differ depending for example on the physics materials of the colliding surfaces in the virtual model, as described in more detail later below (e.g. by setting different coefficients of friction for different virtual surfaces and adjusting the haptic feedback based on the simulated frictional force in the virtual model).

The input device may alternatively or additionally output haptic feedback based on one or more forces acting on the virtual apparatus (for example resulting from forcefields). Particular haptic feedback may be output by the input device 11 based on the effects of such forcefields, for example particular vibration patterns (which may be different or the same as other haptic feedback - e.g. haptic feedback output when the virtual apparatus 20A collides with a virtual object). The input device may output a force which corresponds to the force on the virtual apparatus 20A caused by the forcefield, for example resistance to user input to move against the forcefield.

In some examples, the input device additionally or alternatively outputs haptic feedback based on the movement of the real-world apparatus. The haptic feedback based on the movement of the real-world apparatus may be weighted relative to the haptic feedback output based on the movement of the virtual apparatus.

Haptics in the loop control of DTIL (HDTIL) is a unique benefit of the DTIL structure. In some examples, the haptic interface is coupled to the simulated robot and not necessarily (but optionally also) directly to the physical robot. The force relationship between the haptic input device position/force and the simulated robot end-effector position (or whichever part of the simulated robot is being specifically controlled using the input device) is stable and high quality in the DTIL methodology. For example, the physics simulation running at high rates (800Hz-3KHz) aids in the high stability and quality. The high stability and quality may be achieved irrespective of whether any haptic feedback is output by the input device based on the movement of the physical robot.

The DTIL methodology (and the high quality and stability) means that the response of the simulated robot to force input from the user via the haptic interface of the input device is fast and may appear to the user immediate, and may be provided with greater fidelity (and/or with less noise) than real sensors can measure. The user can drive the simulated robot and accurately "feel" collisions with obstacles and motion resistance due to kinematic singularities very naturally. The haptic feedback is able to be more varied and more immediate than if, for example, the haptic feedback was based solely on the physical robot. In control terms, this is because the impedance bandwidth between the haptic input device and the simulated robot is much wider than would be the case if the haptic input device were directly coupled to only the physical robot.

As mentioned above, the input device may output haptic feedback based on the movement of the simulated robot and the forces acting thereon in the virtual environment and also based on the movement of the physical robot and the forces acting thereon in the real-world environment. The result is that the user can "feel" the simulated environment through the haptic interface and navigate it extremely intuitively whilst at the same time feeling the dynamics of the physical robot and resistance resulting from the physical robot contacting resistance in the physical world which may not be modelled in the simulated world. Balancing the relative weighting of haptic feedback provided to the user from the simulated interaction and the physical (real-world) interaction may depend on the specific task.

Dynamic properties of the simulated robot can be adjusted to further extend the impedance bandwidth and increase haptic "transparency" with the tradeoff that positional error between the simulated robot and physical robot will grow.

The haptic sensory channel can be an intuitive mode for communicating and interpreting information in real-time and as a result of having a combination of a haptic device coupled with a DTIL it is possible to use haptic effects, materials and other force, vibration, texture and/or heat information to provide additional information to the user.

In an example, when resistance to a direction of motion is felt by a user during manipulation of the simulated and/or physical coupled twin, it is not necessarily clear what the cause of the resistance is. It could be a joint singularity, it could be two joints colliding with each other, or it could be that a part of the simulated robot is colliding with a virtual constraint or another object. By applying different physics materials, in this case the coefficient of friction, to different surface contacts in the virtual model, it is possible for the user to gain an understanding of what kind of contact is occurring, e.g. in an example friction between a virtual robot's links is zero to permit minimum resistance but friction between a link and a virtual object is very high to make it clear to the user that motion is being inhibited by the virtual environment.

Further, friction can be set so high in the virtual model that a joint simply stops on contact and no sliding is permitted so movement does not continue until the user imparts a force which causes the contacting joint to move perpendicularly away from the virtual contact surface. In the above, joint may refer to any part of the virtual apparatus/robot.

As mentioned above, a linkage may be defined between an element of the input device and an element of the virtual apparatus which is being controlled via the modelling unit 10 by the user input data. The linkage may comprise a mass-spring-damper relationship. Such a defined linkage between the virtual apparatus and the input device affects how feedback (e.g. haptic feedback) is output by the input device. For example, a mass-spring-damper relationship may provide additional "flex" in the haptic feedback that a user feels when controlling (via the modelling unit 10 through user input) the virtual apparatus.

An advantage of the DTIL methodology disclosed herein is that feedback (e.g. haptic feedback) may be provided to a user without the requirement that the real-world apparatus includes particular sensors for providing such feedback. For example, the haptic feedback output by the input device may be based only on the movement of the virtual apparatus and one or more (modelled) forces acting on the virtual apparatus in the virtual model, but the user may still "feel" as though they are operating a real, physical robot. Due to the virtual model this effect is achieved without the need for particular sensors (e.g. force sensors, etc.) in the real-world environment. Nonetheless, the real-world data may include data from sensors in the real-world environment, for example to enable improved control of the virtual apparatus.

In some examples the modelling unit 10 receives the real-world data from sensors 12 (as indicated in the systems 1 and 2 illustrated in Figures 1 and 3). The real-world data may comprise image data and/or video data and/or laser scanning data and/or mass data and/or center of mass data and/or surface friction data and/or surface stiffness data and/or force sensor data and/or position sensor data and/or velocity sensor data. The sensor 12 may comprise a plurality of sensors and may comprise any of at least one camera, at least one laser scanner, at least one weighing scale, at least one contact probe, at least one force sensor, at least one position sensor, and at least one velocity sensor.

Any of the sensors 12 may be mounted on the real-world apparatus 20. In an example, the real-world data comprises feedback data from one or more actuators or adjustable elements of the real-world apparatus 20 and the at least one sensor 12 comprises at least one control/monitoring element of the real-world apparatus 20. That is, the sensor 12 may comprise at least one sensor as part of the real-world apparatus 20. The sensor 12 may comprise at least one sensor being part of the controller 14, and thus the controller 14 may feed back real-world data to the modelling unit 10. As already mentioned, the controller 14 may be a part of the real-world apparatus 20.

The input data may be (at least partially) provided by a machine learning model. In this sense, the user may comprise a machine learning (ML) model or artificial intelligence (Al). If an ML model is used, the modelling unit 10 may train the ML model in training phase, and in the training phase the modelling unit 10 may not be connected to any real-world apparatus. That is, when training an ML model to provide input the modelling unit 10 does not need to actually control a real-world apparatus. In such a training phase human input as well as ML input may be provided together.

Use of virtual constraints can aid a human user in completing e.g. a teleoperation task. It is also useful when implemented as task abstraction for machine learning. ML algorithms have been demonstrated to be able to learn complex motions well and to deal with noise and uncertainty in a way which "hard-coded" motion profiles cannot. However, there is often a limit to the extent with which an ML model can deal with generalization from one problem to another.

On the other hand, semantic Al, which can understand quite broad concepts and make decisions, has also rapidly advanced in recent years (commonly grouped under the term Large Language Models, LLMs). It may be desirable to use modern semantic AI models to control robotic systems, but bridging the gap between LLM-style inputs defining the task to be achieved and reinforcing learning algorithms capable of training a low level control system to perform a specific, well defined task is a difficult problem. The DTIL methodology employing virtual constraints can assist greatly in overcoming this problem. By creating a library of "dynamic constraints" associated with functional concepts, a simple semantic language can be used to build quite complex task sequences. For example, the semantic input "keep end effector within 5cm of the cube and 10cm above the floor" corresponds to two constraints, and the semantic input "align tool axially with bolt and rotate about bolt axis clockwise for 10 revolutions" corresponds to a single constraint (angular constraint) between two objects with one parameter (angular offset about defined axis) changing over time by 10x2xPI radians.

Conceptually, this "constraint dictionary" may be considered as a sophisticated version of G-Code. G-code for CNC (computer numerical control) is a small set of simple motion profiles that are used to define motion in CNC, e.g. for a 3D printer and other automated machine tools. Common "G-Codes" include:
G00: Rapidly move in a straight line to a given coordinate;
G01: Move in a straight line at a given speed; and
G02: Move clockwise about a given centre of rotation.

The concept of the constraint dictionary described above for the DTIL methodology using virtual constraints may be referred to as "Simulation Code" (S-code). This S-Code is much more sophisticated than G-code in what can be achieved. In its simplest form S-code may simplify certain tasks for a human operator (for example a single human operator controlling multiple cooperating robots). However, S-code may be useful as an abstraction for an AI approach in robotic control, simplifying the tasks required by the AI to achieve particular goals and making the result more robust to dynamically changing and unpredictable environments.

The control of the virtual environment by the modelling unit 10 includes, in some examples, prediction. For example, in some examples the modelling unit 10 is configured to model a virtual moving object in the virtual environment (e.g. corresponding to a real-world moving object in the real-world environment) and to predict a path of the virtual moving object. The modelling unit 10 may then control the movement of the virtual apparatus 20A based on the predicted path of the virtual moving object. This movement of the virtual apparatus 20A would be carried through to the movement of the real-world apparatus 20 due to the control of the real-world apparatus 20 by the modelling unit 10 based on the movement of the virtual apparatus 20A.

The modelling unit 10 makes the prediction of the path of the virtual moving object at each of a plurality of time steps. The prediction at each time step is based on updated real-world data. The modelling unit 10 can similarly predict a path of the virtual apparatus 20A. This prediction is enabled by the high-frequency physics engine's ability to run the virtual model slightly ahead of the read-world approximation (as described above) - i.e. "temporal advancement".

Such prediction could be used to control a physical robot to catch a thrown ball (provided the ball's position and velocity were extractable from the real scene (real-world environment) through e.g. image analysis). Such prediction and control in an example comprises representing the thrown ball in the simulated scene with a position and speed and running the simulation forward in time with a set of constraints that drive the virtual robot end effector towards where the virtual ball will be and cause the virtual end effector to align facing the direction of travel of the virtual ball and match its speed for a smooth intercept. As described above, this simulated motion of the virtual robot would be carried through to the physical robot.

Whilst the simulated motion path necessary to intercept the virtual ball is not necessarily determined in the first time step of the prediction, a series of simulations can be run in parallel and the best one selected to drive the virtual robot (reflex phase). This can be repeated at each time step as the virtual ball's motion is continually corrected for (based on the real-world data indicating the real-world ball's motion) and the solution is iteratively improved (refinement phase).

To reduce the processing burden, the simulation may be configured to run at coarser time steps compared to when the modelling unit 10 is not implementing such prediction processing, providing a slightly less accurate simulation.

A multi-core processor may be used by the modelling unit 10 to compute multiple variations of a simulation, each representing a possible future depending on chosen motor torques and the current best estimate (the simulation which is closest to its goal of intercepting the ball) selected as the next set of inputs to drive the virtual robot, and thus also the physical twin. In this case, the simulation that is determined closest to catching the ball is used as the "seed" for the next set of future predictions but with updated starting conditions based on the new position of the virtual robot and virtual ball as indicated by the real-world data. The virtual robot's motion would not be exactly correct initially, but the system as a whole would quickly iterate towards a solution which intercepts the ball with increasing accuracy/certainty as the ball get closer. The prediction may be considered to adopt Monte-Carlo simulation techniques.

In an example, rather than a ball, a physical robot is controlled to catch an object that has fallen during manipulation. For example, a physical robot is controlled to catch a barrel of nuclear waste in a nuclear industrial setting.

Rather than catching the object once it has fallen, the physical robot in some examples is controlled to prevent the object from falling during manipulation. That is, a DTIL system employing the prediction methodology described above (which may be referred to as Diverging Future Prediction) may simulate in the virtual model the consequence of loss of grasp of the virtual object at each point in time based on the current orientation and velocity and predict the consequence. This may be used by the modelling unit 10 to control the virtual robot (and thus consequentially the physical robot) to continually maintain the position of a second manipulator in the location of the most likely direction of fall of the object. This may also give the operator/user a more detailed situational awareness or alert the operator when a drop is predicted to result in the barrel colliding with another barrel, for example.

The prediction functionality of some examples described above is useful when implementing automated task execution. Conventionally, when programming a robot using what is known as a "Teach Mode", a robot is guided through a set of motions and these motions are recorded so they can be "played back" (i.e. repeated) to automate a repetitive task. Playback is generally via duplication of all the joint angles so the precise motion of the entire robot kinematics is duplicated, although in some cases only an end-effector position and orientation is recorded and the robot's own controller calculates the joint angles and velocities necessary to recreate the path. If a reinforcement learning (ML) approach is used, the record/playback may fuse cartesian and joint space information along with some understanding of the global objective to allow a degree of noise rejection and adaption to task changes.

A problem with all of the approaches to automated task execution described above is that path recreation/playback is difficult because the joint kinematics cannot be closely recreated - for example because the path was clear during the "Teach" mode but in the automated execution of the task there is now a barrier in the way of one of the robot, e.g. one of the linkages/joints. That is, there is no framework in the "teach" step in these approaches to allow the robot in the automated task execution to adopt a significantly different kinematic configuration to reach its destination.

When implementing the DTIL methodology, if the goal path is recorded in cartesian coordinates, the resulting kinematic configuration required to follow the goal path can be generated at run time in the virtual model and the forward prediction aspect described above may be used, effectively allowing the virtual robot to "bounce" off obstacles as the end effector travels towards its target. The physical robot twin will then follow the motion of the simulated robot under the control of the modelling unit 10, in real-time and be prevented from hitting any obstacles. As described above, the risk of hitting real-world objects may be reduced due to slightly expanded collision surfaces in the virtual model. Additionally, constraints can be added to e.g. allow certain joints in the virtual robot more or less deviation than others, or repulsions fields can be applied to environment objects to "push" the robots linkages around and away from them.

The prediction functionality described herein is not essential for a robot to avoid collisions. For example, as described above, the use of forcefields in the virtual model enables the virtual robot to avoid collision with virtual objects (and thus the real-world robot to avoid collision with real-world objects).

As indicated above, the input data may comprise information indicating which of a plurality of parts of the virtual apparatus 20A is to be controlled based on the input data. For example, looking at the virtual apparatus 20A illustrated in Figure 2, the user could control, via the input device, any of the elements 22A, 24A, and 26A. Furthermore, the user input data may indicate translation of the virtual apparatus 20A.

Also as indicated above, the modelling unit 10 may display a representation of the virtual model on a display (e.g. the viewer 13 illustrated in Figure 3). The modelling unit 10 may implement a cursor-based control scheme for controlling the virtual apparatus based on the user input data. In this case, a cursor is displayed in the displayed virtual model and the user controls the movement of the cursor using the input device, and can select which part (or parts) of the virtual apparatus 20A to control using the cursor. That is, when the cursor in the virtual model is within a threshold distance of a part of the virtual apparatus in the virtual model and when the user input data includes a control indication, the modelling unit 10 controls the movement/actuation of that part of the virtual apparatus based on the user input data. The control indication may correspond to the user engaging a clutch functionality of the user input device (e.g. the click of a mouse or the depression of a trigger, among many other mechanisms).

By the implementation of such a cursor-based control, the user is able to "grab" a part or parts of the virtual apparatus 20A and move that part or parts (or "grab" the whole virtual apparatus and translate the virtual apparatus 20A). The cursor-based control may be implemented in a 3D environment (e.g. using VR/XR). That is, the modeling unit 10 may display a representation of the virtual model using VR/XR. Herein, any reference to VR is considered to include AR and MR, i.e. XR. The cursor-based control may be implemented in a 2D environment.

An example implementation including a cursor-based control scheme for controlling a virtual apparatus based on the input data is described as follows and may be referred to as Immersive Haptic Control (IHC). In IHC, when the user is not directly controlling the virtual apparatus using the input device (i.e. the clutch functionality is not engaged), the input device is represented by a 3D cursor in the virtual environment. The motion of the input device is usually but necessarily mapped such that the full workspace of the input device matches the full reachable workspace of the current manipulator(s). The user is able to move the cursor around the virtual environment and "feel" (experience forces due to) contact between the cursor and the entities in the virtual model - e.g. the virtual apparatus and the virtual environment. This is enabled by haptic feedback output by the input device based on the cursor being positioned close to or contacting an entity of the virtual model in the virtual model. Whether or not such proximity or contact between a cursor and the virtual apparatus leads to a corresponding movement (e.g. a "nudge") of the real-world apparatus (under the control of the modelling unit 10) is a design choice. The user is able to, while the cursor is in contact with or close to a part of the virtual apparatus (e.g. linkages), engage a clutch functionality of the input device to attach the cursor to the part of the virtual apparatus. When the clutch functionality is engaged, user input provided through the input device is used by the modeling unit 10 to move the virtual apparatus (and thus cause movement of the real-world apparatus based thereon). Control gains of the haptic feedback may be chosen such that movement of the virtual apparatus feels "light".

In some examples, the modelling unit 10 displays a Virtual Haptic control panel (VHCP). If using haptic devices it can be particularly challenging to perform other UI tasks - typically a user has to stop an activity to take up a mouse/keyboard, or commonly in an operational setting there will be an additional operator/user. If combining VR or AR/MR with haptic interaction in a DTIL implementation, a VHCP is practical. In such a scenario, when the user switches from Tele-operation control (haptic interface controls the virtual (and thus consequentially the real-world) robot) to immersive control (haptic interaction and representation of a 3D cursor) the VHCP becomes visible. The "haptic" cursor continues to interact the simulated robots and/or environment (and haptic feedback is output by the input device to indicate this interaction) but it is also now possible for the user to interact with the VHCP, feeling it, pressing buttons, rotating dials etc. The VHCP does not collide with the simulated robots or environment. By touching and clicking (holding) with a button or other clutch functionality on the haptic input device the VHCP can be freely repositioned to avoid visually or haptically obscuring the area of interest. While grabbing to reposition, the VHCP in an example becomes temporarily transparent.

Although a VHCP can be used without VR/XR, judging depth and accuracy on a flat screen to press 3D controls using a 3D input device may be considered slow and cumbersome, whereas when a 3D UI is used with a 3D interface in a 3D virtual setting interaction with the UI is intuitive and has low cognitive load as it very closely mirrors familiar movements/actions.

More generally, the modelling unit 10 may provide a GUI (graphical user interface) and display a representation of the virtual model on the GUI to be interacted with by the user to provide user input. This may be applied either in VR/XR or on a flat display.

VR may be implemented in systems of the present disclosure as follows. VR may be incorporated fluidly as part of a workflow, e.g., allowing a user to don and doff a VR headset at will, wherein the system automatically recognizes the user wearing or not wearing the headset and reconfigures the scene (viewpoint) and UX (or GUI) automatically. Immersive displays (VR or MR) may be uncomfortable for some users, particularly for prolonged use, and they also limit situational awareness, among other perceived drawbacks. However, immersive visualization of a task may be useful, and thus it is advantageous to make VR/MR use as fluid as possible with as little friction (negative UX consequences) as possible so an operator/user can quickly jump into VR, perform a detailed task, and jump back out again to work on regular computer monitors (i.e. displaying a representation of the virtual model in 2D) simply by taking the headset off.

Different interaction paradigms are supported based on a UI selection and if the user is wearing the headset:
- Non-VR relative position/orientation (clutch) style 3D interaction
- VR 1:1 Immersive control, in which real-world movement in the real-world approximation, and viewer scale, correlates 1:1 with the virtual model
- VR 1:n "Fish Tank", in which the virtual model is smaller than the real-world approximation such that a large scale task (e.g. 1-10 meters) maps to human ergonomics of 30-60cm³ in both visual and haptic feedback (e.g. like having a "toy" version of the real-world apparatus before the user)
- VR n:1 "Space Inflation", in which the virtual model is enlarged such that small scale tasks (e.g 1mm-5cm) are mapped to human ergonomics of 30-60cm³ in both visual and haptic feedback.

A benefit of the DTIL methodology is "ARAC" (any robot as a cobot). A Collaborative Robot or "Co-Bot" (or cobot) is a robot intended for use working alongside humans and has various safety functions/protocols to support this. It is also typically the case that the robot is designed to be moved by a human, where the human user grabs the robot and is able to freely manipulate its position and kinematic configuration. Conventionally, to enable this functionality, a cobot is required to have multiple force sensors embedded in its joints to respond to forces applied at various points on its structure. This enable the cobot and its control system to sense unintended contact (e.g. colliding with a human) and stopping motion. Many robots do not have this functionality and as such, conventionally they cannot be safely operated close to a human and cannot be freely manipulated by a human.

As mentioned, a benefit of the DTIL methodology is "ARAC" (any robot as a cobot). That is, using the DTIL methodology described herein, the simulated robot is used as a proxy interface for the cobot, regardless of whether the physical twin has cobot-like functionality as described above. Beneficially, but not necessarily, VR/AR or mixed reality (MR) may also be used to allow a user to perceive themselves as if they were standing right next to the robot, for example.

Using any appropriate input device (mouse/keyboard, 3D wand, VR Tracker of haptic device, etc.) the user is able to "grab" (attach to) a simulated robot at any point on its structure and freely manipulate the robot as if they were co-present and grasping a fully functional co-bot. Due to the DTIL methodology, this works with any robot which can be controlled via the DTIL concept, regardless of any in-built cobot functionality or relative size. For example, a large-scale industrial manipulator can be grabbed virtually and manipulated at any point in a similar way that a smaller-sized cobot could be physically manipulated in a conventional manner.

Further, as the simulation/virtual model can accept a wide range of control gains and remain stable, it is possible to achieve a responsiveness much greater than is typically achievable by joint-based force sensing on a real cobot in a conventional manner.

Any number of simultaneous contact points on a virtual apparatus can be supported. Typically, this may be two points of contact so a user is able to manipulate the kinematics of the virtual apparatus with two hands, for example simultaneously positioning an end effector/tool whilst adjusting a linkage/joint to attain a preferred configuration for a task. Multiple users may provide input for control of a virtual apparatus simultaneously, for example because the scenario is highly complex or because an expert is demonstrating to a novice user how to perform a task with a robot.

As previously mentioned, additional constraints may be applied in the virtual model, for example to assist in a workflow, e.g. by constraining an end effector of a virtual apparatus in orientation and position and virtually "grabbing" another point on the virtual apparatus the kinematics can be moved through the null-space without interrupting a task performed by the end-effector of the real-world apparatus in the real-world environment. As another example, an end effector of a virtual apparatus may be locked in orientation or to a trajectory or at a fixed radius offset from a target point, and a user may "grab" and move the body of the virtual apparatus into a better position for a task.

A physical, real-world cobot (in the conventional sense - i.e. including force sensors as described above) may be used as the real-world apparatus. As indicated above, the force sensors of the real-world apparatus may be received as real-world data by the modelling unit 10 and the modelling unit 10 can control the virtual model to map these forces/torques onto the virtual apparatus. As also indicated above, the input device may receive the real-world data sensed by the force sensors on the physical cobot directly and may output haptic feedback based thereon.

A typical workflow example demonstrating a benefit of DTIL and ARAC is as follows. A user/operator is conducting a two handed task using two virtual robots (corresponding to two real-world robots), each hand connected (virtually coupled) to the end effector of a different robot in a standard tele-operation configuration. At some-point in the operation, the elbow joint of one of the robots (robot-1) drops into an undesirable location. The user responds by disconnecting the hand not currently driving the robot with the dropped joint (they might disconnect by pressing/releasing a button, double clicking, pressing a foot pedal, issuing a voice command etc.). On releasing the other robot (robot-2), joint locks may be automatically engaged in the virtual model and this restriction of movement carried through to the real-world robot-2 by the control of the modelling unit 10. This is to prevent the virtual robot-2 and the real-world robot-2 from drifting while not under user control. Then, whilst still coupled to robot-1 with the dropped elbow, the operator uses their free hand to "grasp" the elbow of the virtual robot-1 and then uses both hands to maneuver the robot end effector and kinematic structure of the virtual robot-1 into a more desirable configuration. Afterwards the user releases/uncouples from the virtual robot-1 the hand holding onto the robot chassis and reconnects to the virtual robot-2, and then continues with the task at hand.

The implementation of DTIL including multiple control points on the virtual apparatus, coupled with the immersive haptic control described above, and implemented in VR/XR presents a realistic experience of being co-present with a robot and able to grasp and manipulate it with a natural an intuitive force replicating a real in-person co-bot interaction.

An advantage achievable due to the DTIL methodology disclosed herein is Human-Scale-Control (HSC). Generally human performance for manual tasks is typically maximal in terms of accuracy, efficiency and comfort over a range of motion that requires no greater movement than afforded by rotation at the elbow, hands and fingers, e.g. between 30cm³ to 60cm³ working volume.

Given that under the DTIL methodology a user interacts with the virtual model (rather than directly with a real-world apparatus in a real-world environment), the virtual model may be resized/scaled compared to the real-world environment, e.g. to make it easier for human control. That is, in some examples, the modelling unit 10 displays the virtual model on the display according to a scale. The scale defines the size of the displayed virtual model compared to the real-world apparatus and real-world environment. Thus the task workspace may be re-sizes to match human performance and is not constrained to be operated in real-world coordinates.

Whether controlling a multi-tonne industrial manipulator or a sub-mm precision surgical robot the task workspace for the user may be mapped to maximise human performance, e.g. 30cm³ - 60cm³. This scale adjustment may be considered particularly effective using VR/MR/AR as, e.g. an industrial manipulator and its work area can appear to be sized so as to fit on top of a desk in front of the user. The user can then perform tasks in real-time or teach/train robot motion in an intuitive and ergonomically comfortable manner. Advantages of HSC include improved efficiency and accuracy, as well as improved ergonomics for a user in terms of work-place safety / occupational health, which is e.g. advantageous particularly for longer duration worki ng.

The DTIL methodology disclosed herein supports sharing haptic (or non-haptic) control between any N:N input device:robot configurations. For example, the virtual apparatus in some examples comprises a plurality of component/subordinate virtual apparatuses and correspondingly the real-world apparatus comprises a plurality of component/subordinate real-world apparatuses. The modelling unit 10 then controls the plurality of component/subordinate virtual apparatuses based on the input data independently of each other.

That is, the DTIL methodology permits the on-demand "attachment" of an input device to a robot, and the on-demand swapping freely to any number of currently simulated robots. Furthermore, an input device may be coupled with multiple robots simultaneously so that a user is able to move multiple robots using the input device. A control scheme in the case of controlling multiple robots (which may be considered a single robot comprising a plurality of component/subordinate robots) includes two modes: "independent", in which each robot mimics the input motion relative to their own coordinate frame; and "grouped", in which the robots move and rotate as a group about a shared world center. That is, the modelling unit 10 in the "grouped" mode is configured to control a plurality of component/subordinate virtual apparatuses based on the input data according to a shared world center. A user is able to control multiple robots simultaneously to, for example, collaboratively grasp and manipulate an object.

Furthermore, alternatively or additionally, in some examples the input device comprises a plurality of component input devices capable of simultaneous use by the same or different users. That is, multiple input (haptic) devices may be coupled with a robot which is useful for collaborative control of a (redundant) cobot or a teaching scenario in which an expert (one user controlling one input device) guides a novice (another user controlling another input device) though a series of motions.

Gloveboxes (and hotcells, factory lines or similar contained work environments) often have a work flow where materials are passed into the work area via a port, processed inside the work area and then passed back out again, perhaps to be encapsulated. The DTIL methodology disclosed herein is most effective when objects to be manipulated are accurately characterized (e.g. shape/geometry, mass, CoM, possibly friction and stiffness also). An approach to enable objects to be well-characterized is to rig a chamber that objects pass through before entering the work area with sensors to characterize an object in real-time as it enters. Data recorded includes any of: shape (from laser scans or image processing techniques), mass, CoM (from integrated weighing scales), surface friction, and surface stiffness (via a contact probe). Once data collection is complete, the object can then be passed into the main work area (e.g. glovebox) and accurately tracked and manipulated. Data collected in this manner may be included with the definition of "pre-control real-world data".

Furthermore, for the DTIL methodology in general it is useful for relevant objects and surface boundaries to be added to the simulation/virtual model. This can be done as a manual process through the generation of 3D collision surfaces as triangle meshes (e.g. by a 3D artist) or by scanning and using 3D reconstruction, e.g. via a laser scanner or an image analysis from multiple photographs or a video stream. Once complete, the 3D reconstruction could be in the form of a point cloud or a polygon mesh or both.

The position of real-world objects may be tracked, for example via IMU (Inertial Measurement Unit), Fiducial Tracking, Active Tracking or Markerless tracking (Al image recognition), and represented in the virtual model as virtual objects with infinite mass or are otherwise represented such that forces acting on the corresponding virtual object in the simulation are rejected.

For objects which are to be manipulated by the real-world apparatus, it is useful to model/simulate these objects in more detail. It will be appreciated that a number of ways exist of modelling objects and collecting data for such modelling, for example including:
- Using UI/UX tools similar to those found in 3D design packages, a user can draw around an object of interest in 3D, gradually refining the boundary through a series of clicks and drags, or "painting" the surface using a virtual brush which slides over the 3D surface. Once delineated, the physics engine (of the modelling unit 10) then automatically removes the static boundary (points in the cloud, polygons or both) and instantiates a new moveable object in the virtual model. This new object is continually tracked in the virtual model.
- Semi-Automatic Object Extraction. ML can be used to train a model that is able to identify objects from a known library and then fit an approximate library shape to a new scan. In this process, a user would click on an area and the AI would then attempt to identify any objects therein. The results of such processing may then be used by the modelling unit 10 to control the virtual model.

- Numerous deep learning approaches which are not described here, for brevity.
- A fully automatic scan using a 3D scanner and by performing a series of predefined grip-rotate moves using a robot to ensure hidden faces of the object are shown to the 3D scanner.

Apart from pre-control real-world data used for glovebox-style applications, real-world data may also be collected for generating the virtual model (before control of the virtual model based on user input) in a general application and may also be referred to as pre-control real-world data.

In other words, the modeling unit 10 may receive pre-control real-world data in a pre-control phase preceding the control of the virtual model. Considering e.g. the glovebox-style application (enclosed workspace), the modelling unit 10 may, when a new real-world object enters the real-world environment, receive pre-control real-world data relating to the new real-world object. Similar to the real-world data, the pre-control real-world data may comprise image data and/or video data and/or laser scanning data and/or mass data and/or center of mass data and/or surface friction data and/or surface stiffness data and/or force sensor data. The same or different sensors may be used to sense the pre-control real-world data as used to sense the real-world data.

Features which may be beneficial in so-called "mission critical" applications are described below. The processing underlying DTIL may be considered Iterative in nature rather than direct. That is, a solution to the next time step in the simulation is gradually improved over time until either the maximum allotted processing time is reached (a hard limit for real-time systems) or the minimum error is reached. An advantage is that the current solution of an iterative solver is generally useful, whereas methods involving direct methods still require many intermediate steps but these steps are unlikely to be useful/meaningful.

An iterative approach is useful for highly complex systems operating under real-time as it must be possible to have a solution, even if inaccurate, at fixed intervals. The result of this is that the solution found for a given time step in the simulation may be invalid, i.e. there may be overlap between virtual entities in the virtual model as the problem space was ill-conditioned and there was not enough time to iterate towards a solution which resulted in zero global penetration. However, because the simulation solver (i.e. physics engine used/implemented in the modelling unit 10) can "warm start" (in the sense that the state of the solver from the previous solve step is used as the beginning conditions of the next solve step), and because the simulation time step may be very small relative to the speed of virtual objects, very little may change between each iteration and the global result is as if there is a continual iteration towards a slowly changing goal and the error is therefore unlikely to grow.

However, it is still possible that errors in the virtual model can arise, either from the physics solver (physics engine in the modelling unit 10) or because the discrepancy between simulated and physical robot is allowed to be large. In a mission critical application, where the consequences of small errors could be large, there are (among others) two strategies that may be utilized as a fail safe: "late collision detection" and "dual-state collision detection".

Late collision detection: Triangle-triangle collision detection in the virtual model can be guaranteed to complete and is based on a set of direct equations. Therefore the worst-case computation time can be known beforehand for a given number of triangles in a scene (in the virtual model). There is thus no uncertainty as to the interpenetration state in the virtual model at the end of the collision detection pass. Incidentally, collision detection between parametric surfaces does not necessarily have this guarantee but the modelling unit 10 may be programmed to operate on the basis of triangle-triangle collision. Because of this certainty, a collision detection phase can be run first at the beginning of an update of the virtual model to define the intersections of virtual objects which must be corrected for, and then again as a final step (after the update) as a means to check the result. If penetration between virtual objects marked as "critical boundaries" exceeds an error threshold the modelling unit 10 can be triggered to enter an error state (as opposed, e.g., to penetration of "padding boundaries" which may for example cause a force to be applied to the virtual apparatus 20A as indicated above). This error state might cause an alert for the user, e.g. indicating the interpenetrating and thus ill-defined virtual objects identified, or the modelling unit 10 may pause all motion in the virtual model but keep updating the positions of virtual entities based on the real-world data and running the solver (i.e. modelling the virtual model) until a valid state is once again reached, and then normal operation may resume. It is likely under most scenarios this pause would not be noticeable to a human user.

Dual-State Collision Detection: Under this approach, the modelling unit 10 performs two collision-detection passes on moving virtual objects (including checking for collisions between moving virtual objects and static virtual objects). For ease of description the virtual and real-world robots are considered here, with the understanding that collision detection may be carried out for other/all virtual objects. The first collision-detection pass is performed on the simulated robot - this is the standard collision pass which is input into the physics solver (physics engine used in/by the modelling unit 10) to generate motion trajectories which cause the simulated robot kinematics to adhere to constraints (e.g. prevent interpenetration). The simulated robot position is then updated based on the real-world data - this creates a "ghost" robot in the virtual model which may be slightly offset from the simulated robot. A second collision-detection pass is performed using the ghost robot, and this can enable the detection of a particular form of error, described below.

As described above, the (small) discrepancy between the simulated robot and its physical twin is part of the design of the DTIL, allowing the simulated robot to lead the physical twin (very slightly) in 4D (temporal + position). If the physical twin is forced to follow the exact path the simulated robot took (not allowed to interpolate) and all objects are static, the physical robot will correct follow a valid, non-colliding path. However, if real-world objects have moved between when the simulated robot position was fed into the solver (the physics engine used in the modelling unit 10 to simulate the virtual model) and when the physical robot twin now occupies the corresponding space in the real-world environment there is the possibility for a collision to occur in the real-world environment. Performing the ghost collision detection can identify potential real-world collisions and/or invalidation of constraints between the true physical robot position and dynamic objects. Should an invalid configuration be detected, recovery simply involves "rewinding" the simulation. That is, the simulated robot is reset to match exactly the current sensed position of the physical twin and all tracked objects are updated. The simulation is then re-run and the resulting forces required to prevent any further interpenetration of the, now mirrored, simulated and physical robot are found and applied.

In more detail, the ghost robot is a collision body only and not part of the physics simulation (virtual model). It serves as a fail-safe. If a collision is detected between the ghost robot and a virtual object there is the danger of a collision (in the real-world environment) and thus the force vector pulling the physical robot along the pre-computed path that the simulated robot followed is now considered invalid. Therefore the virtual robot is reset to match the ghost (and therefore real-world) robot and the physics solver is rerun. This will result in a collision being detected between the virtual robot and whatever the ghost robot was colliding with. This "actual" or "proper" collision detection (in the sense that it involves the virtual robot and not the ghost robot which is merely a collision body) results in the corresponding force vectors which will move the virtual robot away from the invalid configuration and consequently pull the real-world robot with it.

To ensure proximity and therefore potential collision is detected before an actual, physical collision occurs, the expanded collision boundaries around objects can be scaled to account for the maximum possible relative velocity between two objects and the maximum permitted translational error between the simulated robot position and the physical twin. A sudden discontinuous movement of the simulated robot may result in an impulse or "kick" force in haptic feedback output by the input device. To account for this the new force may be interpolated smoothly over a few time steps.

Techniques disclosed herein may be combined to realize a uniform, performant and ergonomic user experience for controlling generic multi-robotic systems. Conventionally in industrial robotics applications it is common that many tasks are performed in-person, with an operator using guiding a Cobot by hand etc. or, for teleoperation, sitting in a purpose-built control station to control a robot. The future of robotic control may move away from bespoke interfaces and dedicated operator workstations, and this is particularly important as robotic integration increases in both scale (100's-1000's of robots in a factory) and sophistication (so there is less need to have humans in the process chain at all) as there is less and less incentive to make robot working environments accessible to humans.

Techniques disclosed herein may be considered a change in paradigm - from the human user going to the robot (or co-bot) or bespoke robot control station (teleoperation) to instead creating a "desk-based" experience enabling centralized, human-scale-control of factories of robots under full or hybrid Al. Techniques disclosed herein including any of DTIL, ARAC, IHC, HSC, and Latency Compensation may be utilized to provide a standard interface and workflow for connecting to remote robots, controlling and teaching them, intervening on error states and/or remotely working alongside them safely.

The techniques disclosed herein may be implemented in a number of fields, for example industrial apparatus/robotic control, warehouse apparatus/robotic control, office apparatus/robotic control, control of apparatuses/robots in space, nuclear apparatus/robotic control, assistive care/rehabilitation apparatus/robotic control. The real-world apparatus may comprise a robot, for example an industrial robot, a robot for use in assistive care/rehabilitation, a robot for use in a nuclear reactor, a robot for use in a warehouse or workplace, and/or a robot for use in space. References herein to an apparatus may refer to a robot or another type of apparatus capable of being controlled.

Although the figures illustrate the real-world apparatus 20 and no other apparatuses, it will be appreciated that the particular form of the real-world apparatus is not limited to the real-world apparatus 20. For example, many different types of apparatuses and robots may be used for DTIL implementations. Such apparatuses may comprise more or fewer movable/adjustable elements (e.g. joints/linkages), wheels or other means of translatory motion, one or more gripper mechanisms, one or more tools such as a screwdriver, a welding attachment, a cutter, etc., and/or one or more attachments for tools to be attached to. The real-world apparatus is not limited to a robot.

Advantages of the DTIL methodology disclosed herein and of further techniques disclosed herein include the following, among others (as described above):
- In some implementations, dynamic collisions between any of a simulated robot's linkages and other simulated bodies (static geometry or other dynamic objects which can also be other robots with physical twins) create new simulated motion paths of all simulated objects represented in the scene that are under the control of the modelling unit 10 such that no objects intersect.
- Constraints modelled in the simulation, which can correspond to physical constraints (robot joints) or control constraints, i.e. purely virtual constraints (e.g. maintaining a fixed distance or orientation between two virtual objects), are included as part of the mathematical "solve" step of the real-time physics engine utilized in/by the modelling unit 10.
- A haptic (force feedback) interface can be included in the control loop allowing a human user to feel (via the input device) resistance to motion of the digitalphysical twin configuration resulting from: simulated robot link-object collisions, physical robot link-real world collisions, virtual constraints, virtual and physical mass/inertia.
- Very effective control of high/redundant DoF robots.
- Effective control of and in particular a solution to challenges that arise with non-kinematically matched tele-operation.
- Simplification of the control of robotics in complex environments.
- Simplification of human-in-the-loop teleportation by reducing cognitive load and reducing errors.
- Reduction of the learning space for a Machine Learning model/AI to learn how to perform a task in a complex environment.

Any features described above may be implemented as a method. For example the operations performed by the modelling unit 10 and/or the controller and/or the system 1 or 2 may be part of a method.

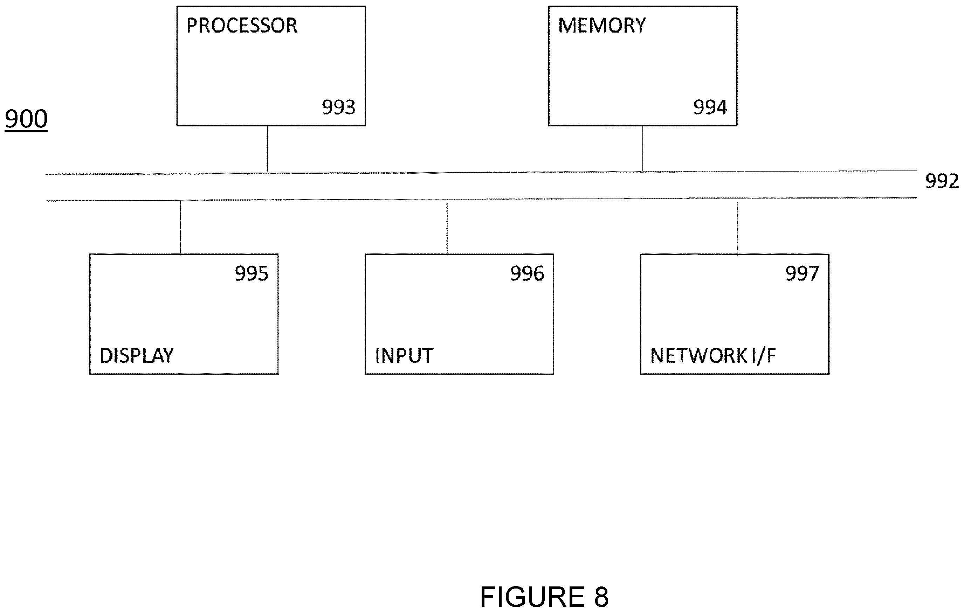

Figure 8 is a block diagram of an information processing apparatus 900 or a computing device 900, such as a data storage server, which embodies the present invention, and which may be used to implement some or all of the operations of a method embodying the present invention, and perform some or all of the tasks of apparatus of an embodiment. The computing device 900 may be used to implement any of the method steps/operations described above. The information processing apparatus 900 in an embodiment constitutes/comprises the modelling unit 10.

The computing device 900 comprises a processor 993 and memory 994. Optionally, the computing device also includes a network interface 997 for communication with other such computing devices, for example with other computing devices or modules of invention embodiments. Optionally, the computing device also includes one or more input mechanisms such as keyboard and mouse 996, and a display unit such as one or more monitors 995. These elements may facilitate user interaction. For example, the input mechanisms may correspond to the input device 11 or may be separate and may, for example, provide an additional means for input, and here a user/operator may input information indicating constraints, etc., rather than user input for controlling the movement of the virtual apparatus 20A. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps/operations disclosed herein, for example any of the operations of the modelling unit 10 and/or system 1 or 2. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps/operations described herein. The memory 994 stores data being read and written by the processor 993 and may store data related to a virtual model and/or a virtual model and/or one or more constraints and/or one or more parameters and/or input data and/or real-world data and/or prediction data and/or mathematical formulae and/or defined linkage information and/or data indicating haptic feedback and/or data indicating feedback and/or data for displaying a virtual model and/or other data, described above, and/or programs for executing any of the method steps/operations described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module or unit or controller may be implemented as a method by a computer and e.g. by the processor 993.

The display unit 995 may display a representation of data stored by the computing device, such as a representation of a virtual model and/or VR/XR representations and/or information indicating constraints and/or GUI windows and/or interactive representations enabling a user to interact with the apparatus 900 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 900 such as that illustrated in Figure 8. Such a computing device need not have every component illustrated in Figure 8, and may be composed of a subset of those components. For example, the apparatus 900 may comprise the processor 993 and the memory 994 connected to the processor 993. Or the apparatus 900 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps/operations described herein may be performed by one or more programmable processors executing a computer program to perform described herein by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both.

The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments. The above-described examples may advantageously be used independently of any other of the examples or in any feasible combination with one or more others of the examples.

## Claims

1. A modelling unit configured to:
control a virtual model of a virtual apparatus in a virtual environment corresponding to a real-world apparatus in a real-world environment;
receive real-world data of the real-world apparatus and input data; and
output a control signal to control the real-world apparatus,
wherein the modelling unit is further configured to:
control the virtual apparatus based on the real-world data so that movement of the real-word apparatus and/or one or more forces applied to the real-world apparatus represented in the real-world data affect movement of the virtual apparatus;
control the virtual apparatus based on the input data so that the input data affects movement of the virtual apparatus; and
control the real-word apparatus based on the virtual apparatus so that movement of the virtual apparatus governs movement of the real-world apparatus.

2. The modelling unit as claimed in claim 1, wherein the real-world data comprises feedback data from one or more actuators or adjustable elements of the real-world apparatus.

3. The modelling unit as claimed in claim 1 or claim 2, wherein:
the modelling unit is configured to control the virtual apparatus based on the real-world data and a defined linkage between corresponding elements of the virtual apparatus and the real-world apparatus so that movement of the real-word apparatus affects movement of the virtual apparatus; and/or
the modelling unit is configured to control the virtual apparatus based on the input data and the defined linkage between corresponding elements of the virtual apparatus and the real-world apparatus so that the input data affects movement of the virtual apparatus; and/or
the modelling unit is configured to output the control signal to control the real-word apparatus based on the virtual apparatus and the defined linkage between corresponding elements of the virtual apparatus and the real-world apparatus so that movement of the virtual apparatus governs movement of the real-world apparatus.

4. The modelling unit as claimed in claim 3, wherein the defined linkage between corresponding elements of the virtual apparatus and the real-world apparatus comprises a mass-spring-damper relationship between the corresponding elements of the virtual apparatus and the real-world apparatus, wherein the control signal is configured to control the real-world apparatus according to the mass-spring-damper relationship and the modelling unit is configured to control the virtual apparatus according to the mass-spring-damper relationship.

5. The modelling unit as claimed in any of the preceding claims, further configured to model at least one constraint in the virtual model, the at least one constraint comprising at least one of:
maintaining a fixed distance and/or a fixed orientation between two entities in the virtual model;
maintaining a minimum and/or maximum distance between two entities in the virtual model;
maintaining a minimum and/or maximum orientation difference between two entities in the virtual model;
maintaining a minimum and/or maximum vertical distance between two entities in the virtual model;
maintaining a minimum and/or maximum distance between an entity in the virtual model and a fixed point in space in the virtual model; and
maintaining at least a part of the virtual apparatus at a fixed position,
wherein a said entity comprises a part of the virtual apparatus or virtual environment.

6. The modelling unit as claimed in any of the preceding claims, further configured to control the virtual model to include in the virtual environment a virtual object functioning as a guide for at least a part of the virtual apparatus.

7. The modelling unit as claimed in any of the preceding claims, further configured to control the virtual model so that at least a part of the virtual environment or virtual apparatus is resized relative to another part of the virtual environment or virtual apparatus compared to the corresponding parts of the real-world environment or real-world apparatus.

8. The modelling unit as claimed in any of the preceding claims, further configured to control the virtual model to include a forcefield at least partially surrounding at least a part of the virtual environment or virtual apparatus, and to control the movement of the virtual apparatus in accordance with the forcefield.

9. The modelling unit as claimed in any of the preceding claims, further configured to model a moving virtual object in the virtual environment corresponding to a moving real-world object in the real-world environment, and configured to predict a path of the moving virtual object and control the movement of the virtual apparatus based on the predicted path of the moving virtual object.

10. The modelling unit as claimed in any of the preceding claims, wherein the input data comprises information indicating which of a plurality of parts of the virtual apparatus is to be controlled based on the input data.

11. The modelling unit as claimed in any of the preceding claims, further configured to:
display the virtual model on a display;
display in the displayed virtual model a cursor, and control the movement of the cursor based on the input data; and
when the cursor in the virtual model is within a threshold distance of a part of the virtual apparatus in the virtual model, and when the input data includes a control indication, control the movement of the part of the virtual apparatus based on the input data.

12. A system comprising the modeling unit and further comprising:
the real-world apparatus; and
an input device configured to receive input and to output to the modelling unit the input data based on the input.

13. The system as claimed in claim 12, wherein the input device is configured to output haptic feedback based on the movement of the virtual apparatus and/or one or more forces acting on the virtual apparatus in the virtual model.

14. A computer-implemented method comprising:
controlling a virtual model of a virtual apparatus in a virtual environment corresponding to a real-world apparatus in a real-world environment;
receiving real-world data of the real-world apparatus and input data; and
outputting a control signal to control the real-world apparatus,
wherein the computer-implemented method further comprises:
controlling the virtual apparatus based on the real-world data so that movement of the real-word apparatus and/or one or more forces applied to the real-world apparatus represented in the real-world data affect movement of the virtual apparatus;
controlling the virtual apparatus based on the input data so that the input data affects movement of the virtual apparatus; and
controlling the real-word apparatus based on the virtual apparatus so that movement of the virtual apparatus governs movement of the real-world apparatus.

15. A computer program which, when run on a computer, causes the computer to carry out a method comprising:
controlling a virtual model of a virtual apparatus in a virtual environment corresponding to a real-world apparatus in a real-world environment;
receiving real-world data of the real-world apparatus and input data; and
outputting a control signal to control the real-world apparatus,
wherein the computer program further causes the computer to carry out as part of the method:
controlling the virtual apparatus based on the real-world data so that movement of the real-word apparatus and/or one or more forces applied to the real-world apparatus represented in the real-world data affect movement of the virtual apparatus;
controlling the virtual apparatus based on the input data so that the input data affects movement of the virtual apparatus; and
controlling the real-word apparatus based on the virtual apparatus so that movement of the virtual apparatus governs movement of the real-world apparatus.
